# EUROPÄISCHE PATENTSCHRIFT

(11) **EP 3 247 614 B1**
(45) Veröffentlichungstag und Bekanntmachung des Hinweises auf die Patenterteilung: **05.05.2021**
(21) Anmeldenummer: 16701473.7
(22) Anmeldetag: 22.01.2016
(51) Int. Cl.: B62D 33/027, B62D 33/033, B62D 33/037

(54) **FAHRZEUG, INSBESONDERE KRAFTFAHRZEUG, MIT EINER FAHRZEUGHECKKLAPPE**
VEHICLE, IN PARTICULAR MOTOR VEHICLE, WITH A TAILGATE
VÉHICULE, EN PARTICULIER VÉHICULE AUTOMOBILE, POURVU D'UN HAYON ARRIÈRE

(30) Priorität: 22.01.2015 DE 102015100959; 22.01.2015 DE 102015100957; 20.02.2015 DE 102015102418; 20.02.2015 DE 202015100816 U; 11.05.2015 DE 102015107349
(43) Veröffentlichungstag der Anmeldung: 29.11.2017
(73) Patentinhaber: Gebrüder Jacob GBR, 31515 Wunstorf (DE)
(72) Erfinder: JACOB, Dirk, 30826 Garbsen (DE); JACOB, Jochen, 31542 Bad Nenndorf (DE); JACOB, Rüdiger, 31848 Bad Münder (DE)
(74) Vertreter: Habenicht, Wieland
(86) Internationale Anmeldenummer: PCT/EP2016/051377
(87) Internationale Veröffentlichungsnummer: WO 2016/116621

(56) Entgegenhaltungen:
- US-A- 5 133 584
- US-A- 5 352 008
- US-A1- 2002 121 794
- US-A1- 2004 227 368
- US-B1- 6 357 813
- US-B1- 6 698 810
- US-B1- 6 905 158
- US-B1- 6 957 840

## Beschreibung

Die Erfindung betrifft ein Fahrzeug, insbesondere ein Kraftfahrzeug, gemäß dem Oberbegriff des Anspruchs 1.

Derartige Fahrzeuge mit Fahrzeugheckklappen sind allgemein aus dem Stand der Technik bekannt. Sie dienen insbesondere bei Fahrzeugen mit einer offenen Ladefläche, wie es beispielsweis und insbesondere Transporter, Liefer- wie auch Lastkraftwagen und insbesondere sogenannte Pick-Ups sein können, dazu, die Ladefläche heckseitig, beispielsweise für Be- wie auch Entladevorgänge, zugänglich zu machen. Vorgenannte Ladefläche ist u.a. unter dem Begriff Pritsche bekannt.

Fahrzeuge der betreffenden Art können auch mit einer überdachten bzw. abschnittsweise überdachten Ladefläche ausgestattet sein, die über die Fahrzeugheckklappe - wie zuvor geschildert - zugänglich gemacht wird.

Des Weiteren umfassen Fahrzeug der betreffenden Art Fahrzeug mit wie auch ohne eigenen Antrieb, wie dies im zuletzt genannten Fall beispielsweise ein Fahrzeuganhänger sein kann.

Fahrzeuge der betreffenden Art sind beispielsweise bekannt aus US 5, 711, 569 A, bei denen die Fahrzeugheckklappe verschwenkbar wie auch abnehmbar am Fahrzeugheck angeordnet ist. Dabei sind insbesondere die zum Verschwenken der Fahrzeugheckklappe vorgesehenen Scharniere derart gestaltet, dass die Fahrzeugheckklappe aus den Scharnieren herausgehoben werden kann. Zur Erleichterung in der Handhabung sieht die dazu aus dem Stand der Technik vorgeschlagene Fahrzeugheckklappe einen Griffbereich vor, um die Handhabung bzw. einen Transport der Fahrzeugheckklappe durch eine Person zu begünstigen.

Des Weiteren sind Fahrzeuge der betreffenden Art aus US 8, 246, 098 B2 bekannt, bei denen in der Fahrzeugheckklappe selbst eine weitere, gegenüber der Fahrzeugheckklappe kleinere Klappe aufgenommen ist, die verschwenkbar zur Fahrzeugheckklappe ist. Dabei ist die kleinere Klappe bei deren bestimmungsgemäßen Anbringung am Fahrzeugheck gegenüber der Fahrzeugheckklappe um eine Achse verschwenkbar, die quer zur Schwenkachse angeordnet ist, um die die Fahrzeugheckklappe zum Fahrzeug verschwenkt. Die kleinere Klappe dient dazu, in einem Öffnungszustand einen Teilbereich der Fahrzeugheckklappe freizugeben, um die Ladefläche besser erreichen zu können, ohne die Fahrzeugheckklappe als solche öffnen zu müssen.

Des Weiteren ist aus EP 1 757 516 A1 ein Fahrzeug in Ausführung eines Fahrzeuganhängers bekannt, der eine am Fahrzeugheck verschwenkbar angeordnete Fahrzeugheckklappe aufweist, die wiederum abnehmbar an dem Fahrzeug angeordnet ist. Dabei sind Scharniere bzw. Aufnahmen für die Fahrzeugheckklappe vorgeschlagen, die entsprechend offen ausgestaltet sind.

Darüber hinaus sind Fahrzeuge der betreffenden Art bekannt aus US 6, 279, 979 B1, DE 361278 C3, US 6679464 B1, US 7549691 B2, US 8740279 B1, US 4028350 A, US 6857678 B2, US 556152A, US 5133584 A, DE 102005005769 A1 wie auch US 2003/001 5885 A1.

Des Weiteren sind Fahrzeuge mit einer Ausgestaltung des Fahrzeughecks bzw. der Fahrzeugheckklappe bekannt, die das Fahrzeug hinsichtlich dessen Nutzbarkeit variabel gestalten. So ist beispielsweise aus US 5133584 A ein Fahrzeug in Ausführung als sogenanntes Pick-Up bekannt, bei dem die Fahrzeugheckklappe aus Plattenelementen gebildet ist, die derart zueinander angeordnet am Fahrzeug angebracht sind, dass eine Rampe zum Beladen des Fahrzeughecks gebildet werden kann. Dazu sind entsprechende Führungsmittel vorgesehen, durch die eine entsprechend erforderliche Bewegbarkeit der Fahrzeugheckklappenbestandteile bewirkt ist.

Ferner ist aus US 5352008 A ein Fahrzeug bekannt, das über eine Fahrzeugheckklappe verfügt, die vorrangig im Hinblick auf einen geringeren Luftwiderstand gebildet bzw. am Fahrzeugheck bewegt werden kann.

Überdies ist aus US 3004790 A ein Fahrzeug bekannt, bei dem die Ladefläche ausziehbar ist, wobei sich bei einer Ausziehbewegung ebenfalls die an der Ladefläche angeordnete Fahrzeugheckklappe bewegt.

Insgesamt sind aus dem Stand der Technik verschiedene Lösungen bekannt, eine Fahrzeugheckklappe an einem Fahrzeug, insbesondere an Kraftfahrzeugen anbringen zu können. Der Aufbau und die Funktion einer betreffenden Fahrzeugheckklappe sind allgemein bekannt. Fahrzeugheckklappen dienen als Bestandteil einer Seitenwandung eines Fahrzeugs u.a. dazu, die heckseitig in der Fahrzeugkarosserie vorgesehene Öffnung zu öffnen bzw. zu verschließen, um den Laderaum im Schließ zustand der Fahrzeugheckklappe heckseitig zu begrenzen. So sind Fahrzeugheckklappen mit ein- wie auch mehrteiliger Teilung u.a. bekannt durch DE 2020070 18286 U1.

Aus US 5 133 584 A ist eine klappbare Rampe für Pickup-Fahrzeuge bekannt. Die Rampe ersetzt die Heckklappe und ist nach außen schwenkbar mit dem Fahrzeug verbunden. Sie ist zusammengesetzt aus zwei über Scharniere zusammenhängenden Platten. Die Schwenkrichtung der Rampe bezüglich des Fahrzeugs und die Schwenkrichtung der Platten zueinander sind gegenläufig.

Die aus dem Stand der Technik bekannten Fahrzeuge der betreffenden Art weisen jedoch u.a. den Nachteil auf, dass Be- wie auch Entladevorgänge erschwert sind. Dies ist u.a. dadurch begründet, dass eine in Öffnungsstellung befindliche Fahrzeugheckklappe, die in dieser Position die Ladefläche zur Be- bzw. Entlademöglichkeit öffnet und damit heckseitig zugänglich macht, durch ihre Abmessungen einen Zwangsabstand zur Ladefläche verursacht.

Demgemäß ist es u.a. problematisch, die Ladefläche beispielsweise durch eine Person oder mittels eines Flurförderfahrzeugs, wie es ein Gabelstapler sein kann, heckseitig zu be- wie auch zu entladen, da der durch die in Öffnungsstellung befindliche Fahrzeugheckklappe hervorgerufene Zwangsabstand zur Ladefläche eine heckseitige Annäherung des Gabelstaplers an die Ladefläche begrenzt.

Vor diesem Hintergrund liegt der Erfindung die Aufgabe zugrunde, ein Fahrzeug anzugeben, dessen Ladefläche besser für Be- bzw. Entladevorgänge zugänglich ist und dessen Ergonomie eines gegenüber den bekannten Fahrzeugen verbessert ist.

Die Aufgabe wird erfindungsgemäß gelöst durch ein Fahrzeug nach Anspruch 1. Bevorzugte Ausführungsformen der Erfindung sind Gegenstand der Unteransprüche.

Die Erfindung fußt auf dem Grundgedanken, eine Verbesserung für die Nutzbarkeit der Ladefläche in der Anbringung der Fahrzeugheckklappe am Fahrzeugheck zu suchen.

Dabei basiert dieser Grundgedanke darauf, dass eine Be- bzw. Entladung der Ladefläche heckseitig erfolgt, indem die betreffenden Ladungsobjekte der Ladungsfläche heckseitig zugeführt werden.

Die Schwenkeinrichtung weist erste Führungsmittel auf, die am Fahrzeugheck angeordnet sind und mit zweiten Führungsmitteln, die an der Fahrzeugheckklappe angeordnet sind und zur translatorischen Bewegungsführung der Fahrzeugheckklappe zu deren Anbringung am Fahrzeugheck zusammenwirken.

Demgemäß sind erste Führungsmittel und zweite Führungsmittel derart eingerichtet und ausgebildet, dass sie im Zusammenwirken vorgenannte translatorische Bewegungsführung für die Fahrzeugheckklappe bilden.

Die translatorische Bewegungsführung wird im Weiteren auch verkürzend als Bewegungsführung bezeichnet.

Im Rahmen der Beschreibung gelten die Aussagen der Anbringung einer Fahrzeugheckklappe analog auch für ein Abnehmen der Fahrzeugheckklappe vom Fahrzeugheck.

Des Weiteren gelten die Aussagen eines Beladens bzw. Entladens ebenfalls analog zueinander wie auch für Vorgänge (wie z.B. das Reinigen, Instandhalten, ...), bei denen die Ladefläche des Fahrzeugs zugänglich zu machen ist. Ferner gelten die Aussagen ebenfalls im Hinblick auf die Zugänglichkeit einer Ladefläche. So sind beispielsweise bei einigen Fahrzeugen am Fahrzeugheck Trittstufen bzw. eine Steighilfe angebracht, die bei geöffneter Fahrzeugheckklappe nicht zugänglich bzw. nutzbar sind. Durch eine Entnahmemöglichkeit der Heckklappe vom Fahrzeug sind ebenfalls derartige Nachteile jedoch aufgehoben, so dass ein sicheres Begehen der Ladefläche eines Fahrzeugs ermöglicht ist.

Diese Zusammenwirkung der ersten Führungsmittel mit den zweiten Führungsmitteln erfolgt derart, dass die Fahrzeugheckklappe zwischen einer Anfangsposition, bei der die ersten Führungsmittel und die zweiten Führungsmittel zueinander für die translatorische Bewegungsführung der Fahrzeugheckklappe angeordnet sind, und einer Zielposition, in der die Fahrzeugheckklappe bestimmungsgemäß am Fahrzeugheck angeordnet ist, bewegbar geführt ist.

Die Fahrzeugheckklappe ist auf einfache Art und Weise dem Fahrzeugheck entnehmbar bzw. an dem Fahrzeugheck anbringbar, wodurch insbesondere eine Ein-Personen- Bedienung zum Anbringen bzw. Abnehmen (Entfernen) der Fahrzeugheckklappe vom Fahrzeugheck ermöglicht ist. Die ersten Führungsmittel bilden im Zusammenwirken mit Zweitmitteln eine Zwangsführung aus, um den Bewegungsfreiheitsgrad einer Fahrzeugheckklappe zugunsten einer einfacheren Handhabung zu reduzieren.

Des Weiteren ist durch eine vorgesehene translatorische Bewegungsführung für das Anbringen bzw. Entnehmen der Fahrzeugheckklappe an das bzw. vom Fahrzeugheck durch Zusammenwirken von ersten und zweiten Führungsmitteln erreicht, dass die Fahrzeugheckklappe entlang einer vorgegebenen Bewegungsbahn geführt ist.

Die Bewegungsführung der Fahrzeugheckklappe im Zusammenwirken der ersten und zweiten Führungsmittel erfolgt dabei insbesondere bei einer Bewegung der Fahrzeugheckklappe in Richtung vom Fahrzeugheck zur Fahrzeugfront (bzw. in umgekehrter Richtung).

Zudem wiesen die ersten Führungsmittel wenigstens zwei um die Schwenkachse schwenkbar am Fahrzeugheck angeordneten Schwenkarme auf, die radial zur Schwenkachse längserstreckt sind und mit den zweiten Führungsmitteln für die translatorische Bewegungsführung der Fahrzeugheckklappe zusammenwirken.

Durch die Gestaltung eines Fahrzeugs ist mittels Zusammenwirken von ersten und zweiten Führungsmittel die Fahrzeugheckklappe nach deren Anbringung am Fahrzeugheck bewegungsgekoppelt mit den/dem Schwenkarmen, mittels dem sie verschwenkbar an dem Fahrzeugheck angeordnet ist.

Insofern befinden sich die Schwenkarme in einer Öffnungsstellung, sobald die an diesen angeordnete Fahrzeugheckklappe in einer Öffnungsstellung ist. Für die Schließstellung gilt analoges. Entsprechendes gilt, sofern die Fahrzeugheckklappe nicht an den Schwenkarmen angeordnet ist.

Die Anordnung der Schwenkarme an der Schwenkachse erfolgt vor dem Hintergrund der vorgenannten Anordnung dahingehend, dass ein erstes freies Ende des jeweiligen Schwenkarmes der Schwenkachse zugewandt ist, während das verbleibende freie Ende der Schwenkachse abgewandt angeordnet ist, wobei erstes und zweites freies Ende in radialer Richtung zur Schwenkachse entsprechend der geometrischen Abmessung des jeweiligen Schwenkarmes zueinander beabstandet sind. Demgemäß weist bei deren Anordnung am Fahrzeugheck das erste freie Ende des Schwenkarmes in radialer Richtung zur Schwenkachse einen gegenüber dem zweiten freien Ende des Schwenkarmes geringeren Abstand zur Schwenkachse auf.

Die vorgenannten freien Enden des jeweiligen Schwenkarmes sind an der Schwenkachse in radialer Richtung zur Schwenkachse zueinander beabstandet. Es ergibt sich dadurch der Vorteil, dass durch die vorgenannten zwei Schwenkarme, die ergänzt werden können um weitere Schwenkarme, die Bewegungsführung der Fahrzeugheckklappe zu deren Anbringung am Fahrzeugheck vereinfacht und präzisiert wird.

Die zweiten Führungsmittel sind dabei an den Seitenflanken der Fahrzeugheckklappe angeordnet, wodurch sich Montagevorteile ergeben. Ferner können die vorgenannten Schwenkarme wenigstens abschnittsweise in einem zwischen Fahrzeugheckklappe und Fahrzeugseiten gebildeten Spalt angeordnet werden, wie dies in einer im Weiteren angeführten vorteilhaften Weiterbildung der Erfindung berücksichtigt ist.

Der Spalt ist ein Bauraum, der zwischen Fahrzeugheckklappe und den an sie angrenzenden Fahrzeugheckseitenteilen besteht und der insbesondere in Schließposition der Fahrzeugheckklappe zwischen der Fahrzeugheckklappe und den Seiten- bzw. Rückteilen des Fahrzeughecks vorhanden ist. Insofern sind die Schwenkarme vorzugsweise in Schließstellung in einem vorgenannten Spalt wenigstens abschnittsweise angeordnet, der beidseitig an den Seitenflanken der Fahrzeugheckklappe existiert. Insofern wird erfindungsgemäß ein typischerweise für die Bewegbarkeit einer Fahrzeugheckklappe Bauart bedingter freier Bauraum genutzt.

Dabei wird der Spalt häufig durch die Außenfläche der Fahrzeugheckkappe, die der Fahrzeugfront abgewandt und nach außerhalb des Fahrzeugs gerichtet ist, wenigstens abschnittsweise überdeckt. Vorzugsweise ist/sind der/die Schwenkarm/Schwenkarme bzw. der Schwenkrahmen in Schließstellung der Fahrzeugheckklappe vollständig in der Schattenfuge aufgenommen.

Der Spalt verhindert, dass die die Fahrzeugheckklappe in Schließposition am Fahrzeugheck nicht ungewünscht eingeklemmt ist und daher einfach zu bewegen ist.

Es ist ein Vorteil, dass die Fahrzeugheckklappe zunächst an den ersten Führungsmitteln mittels der zweiten Führungsmittel angeordnet werden kann, um daraufhin entsprechend ausgerichtet bzw. am Fahrzeugheck positioniert werden zu können.

Dadurch verringern sich die Freiheitsgrade, die die Anbringung einer Fahrzeugheckklappe am Fahrzeugheck erschweren, indem eine sichere Bewegungsführung der Fahrzeugheckklappe durch die vorgenannten Führungsmittel gegeben ist.

Dadurch ist u.a. erreicht, dass eine ungewünschte Bewegung der Fahrzeugheckklappe in Richtung der wirkenden Schwerkraft unterbunden ist bzw. die manuellen Handgriffe zur Anbringung der Fahrzeugheckklappe am Fahrzeug signifikant reduziert sind.

Die Bewegungsführung bewirkt, dass in einer Öffnungsstellung der Fahrzeugheckklappe die Fahrzeugheckklappe den ersten Führungsmitteln auf einfache Art und Weise entnommen wie auch entsprechend zugeführt werden kann.

Dazu befinden sich die ersten Führungsmittel zur Vereinfachung der Anbringung in einer zur Fahrzeugheckklappe analogen Öffnungsstellung und bilden dabei insbesondere eine Auflage für die Fahrzeugheckklappe aus, um diese am Fahrzeugheck zu dessen Positionierung/Ausrichtung für ein Anbringen an dem Fahrzeugheck halten und vor einem Herunterfallen (ungewünschte Bewegung in Richtung der wirkenden Schwerkraft) bewahren zu können. Analoges gilt für ein Abnehmen der Fahrzeugheckklappe vom Fahrzeugheck.

Vorteilhafterweise ist dadurch die Handhabung der Fahrzeugheckklappe während des Anbringens bzw. Abnehmens am/vom Fahrzeugheck durch ein Fahrzeug erleichtert, indem die erreichte Bewegungsführung u.a. eine ungewünschte Beschädigung der Fahrzeugheckklappe z.B. durch Kollision mit dem Fahrzeugheck wirksam verhindert.

Es ist außerdem von Vorteil, dass die Fahrzeugheckklappe durch lediglich eine Person am Fahrzeugheck sicher anbringbar ist. Das bietet für das Anbringen/Abnehmen einer Fahrzeugheckklappe am/vom Fahrzeugheck eines Fahrzeugs eine Ausrichtungs- bzw. Positionierungshilfe, da die Fahrzeugheckklappe zunächst mittels der ersten und zweiten Führungsmittel eine Stützung erhält, um daraufhin zum Fahrzeug zu deren Anbringung entsprechend ausgerichtet bzw. positioniert werden zu können.

Unter einer bestimmungsgemäßen Anordnung der Fahrzeugheckklappe am Fahrzeugheck ist zu verstehen, dass diese zu ihrer Funktionserfüllung zwischen der Schließ- und Öffnungsstellung um die Schwenkachse verschwenkbar am Fahrzeugheck angeordnet ist.

Eine Öffnungsstellung der Fahrzeugheckklappe ist beispielsweise und insbesondere dadurch gekennzeichnet, dass diese die Ladefläche eines Fahrzeugs heckseitig, insbesondere für Reinigungs-, Be- wie auch Entladevorgänge zugänglich macht. Dazu befindet sich die Fahrzeugheckklappe beispielsweise und insbesondere in einer waagerechten bzw. nahezu waagerechten Ausrichtung bzw. einer dazu annähernden Ausrichtung relativ zum Fahrzeug. Grundsätzlich ist eine derartige Ausrichtung für eine Anbringung der Fahrzeugheckklappe günstig, da dabei eine Bewegung der Fahrzeugheckklappe in Richtung vom Fahrzeugheck zur Fahrzeugfront (bzw. in umgekehrter Richtung) zur Ausrichtung ausreichend ist.

Die Schwenkachse erstreckt sich entlang der Ladekante des Fahrzeugs. Die Ladekante des Fahrzeugs führt dabei zu einer heckseitigen Begrenzung der Ladefläche.

Die Ladekante bzw. die Schwenkachse ist bei einem unbelasteten Fahrzeug im Wesentlichen bzw. nahezu parallel zu einer Radachse bzw. in Richtung entlang einer Radachse gerichtet. Die Radachse ist die Achse, zu der ein bzw. wenigstens zwei Räder, mit dem/denen sich das Fahrzeug am Untergrund zu dessen Fortbewegung abstützt, drehbar gelagert ist/ sind. Für Kettenfahrzeuge gilt dies analog.

Die Fahrzeughecklappe ist bei bestimmungsgemäßer Anordnung beispielsweise und insbesondere mittels Drehgelenken bzw. Scharnieren gelagert am Fahrzeugheck angeordnet.

Die Ladefläche ist ergonomischer zu handhaben, weil sie einfacher, insbesondere für ein Be- bzw. Entladen, zugänglich ist.

Des Weiteren führt ein derart gestaltetes Fahrzeug dazu, dass die Ladefläche des Fahrzeugs vielfältiger genutzt werden kann, indem beispielsweise eine Fahrzeugheckklappe durch eine weitere bzw. gegenüber der erstgenannten anders gestaltete Fahrzeugheckklappe ersetzt werden kann, die mittels der ersten und zweiten Führungsmittel an einem Fahrzeug anbringbar ist.

Dadurch ist es möglich, bei einem Fahrzeug unterschiedliche Fahrzeugheckklappen zu verwenden, die unterschiedlich gestaltet sein können. Damit erschließt sich ein weiterer Vorteil, der darin liegt, dass für unterschiedliche Verwendungen eines Fahrzeugs entsprechend geeignet gestaltete Fahrzeugheckklappen verwendbar sind. Dabei kann auch die Fahrzeugheckklappe durch ein Netz bzw. Haltegurte ersetzt werden.

Die durch das Zusammenwirken von ersten Führungsmitteln mit zweiten Führungsmitteln bewirkte translatorische Bewegungsführung ist vorzugsweise in radialer Richtung zur Schwenkachse gerichtet. Dadurch ist eine weitere Erleichterung in der Handhabung für ein Abnehmen/Anbringen der Fahrzeugheckklappe vom/an das Fahrzeugheck eines derart gebildeten Fahrzeugs erreicht.

Für das Zusammenwirken der ersten Führungsmittel mit den zweiten Führungsmitteln zur Bildung einer translatorischen Bewegungsführung für die Fahrzeugheckklappe ist beispielsweise und insbesondere vorgesehen, dass die ersten Führungsmittel und die zweiten Führungsmittel für die translatorische Bewegungsführung wenigstens abschnittsweise komplementär zueinander gebildet sind.

Dadurch ist auf einfache Art und Weise erreicht, dass die Abstimmung der ersten Führungsmittel für die zweiten Führungsmittel auf einfache Art und Weise erfolgen kann.

Des Weiteren ist dadurch erreicht, dass eine translatorische Bewegungsführung nahezu spielfrei erreicht werden bzw. eine definierte Bewegungsführung für die Anbringung der Fahrzeugheckklappe am Fahrzeug durch die vorgenannten Führungsmittel vorgegeben werden kann.

Eine Präzisierung der Bewegungsführung für die Fahrzeugheckklappe zu deren Anbringung am Fahrzeugheck kann durch Reduzierung der Bewegungsfreiheit der Fahrzeugheckklappe während dieses Vorgangs erreicht werden. Dazu sieht eine Weiterbildung vor, dass die ersten Führungsmittel im Zusammenwirken mit den zweiten Führungsmitteln eine wenigstens abschnittsweise lineare Führung (Linearführung) für die Anbringung der Fahrzeugheckklappe am Fahrzeugheck bilden.

Die Ausbildung einer translatorischen Bewegungsführung kann auf unterschiedliche Art und Weise erfolgen. So ist in einer zweckmäßigen Weiterbildung vorgesehen, dass die ersten Führungsmittel in Zusammenwirken mit den zweiten Führungsmittel eine Gleitlagerführung bzw. Rollenführung bzw. Kugellagerführung für die translatorische Bewegungsführung ausbilden.

Vorgenannte Mittel zur Bewegungsführung können dabei unterschiedlich ausgebildet sein, beispielsweise nach Art eines Linearlagers. Die Art der Lagerung hängt u.a. auch von den Umgebungsbedingungen ab. So sind Gleitlagerführungen bewährt für den Einsatz in Umgebungen, die eine Rollen oder Kugellagerführung verbieten.

Die Bewegungsführung, die durch das Zusammenwirken von ersten und zweiten Führungsmitteln entsteht, ist auf unterschiedliche Art und Weise realisierbar. Auf einfache und kostengünstige Art und Weise können die ersten Führungsmittel im Zusammenwirken mit den zweiten Führungsmitteln zur Bildung einer Teleskopschienenführung eingerichtet und ausgebildet sein, wie dies in einer weiteren Weiterbildung berücksichtigt ist.

Die ersten Führungsmittel wie auch die zweiten Führungsmittel können auf verschiedene Art und Weise realisiert werden. Auf einfache Art und Weise ist es möglich, die ersten Führungsmittel unter Zuhilfenahme von Profilkörpern vorzunehmen, wie dies beispielsweise und insbesondere Stangen, Streben, Profilkörper sein können.

Zur weiteren Steigerung der Benutzungsfreundlichkeit einer Fahrzeugheckklappe zu deren Anbringung am Fahrzeugheck ist in einer ergänzenden Weiterbildung vorgesehen, dass wenigstens zwei der Schwenkarme durch Kopplungsmittel derart miteinander bewegungsgekoppelt sind, dass deren Schwenkbewegung um die Schwenkachse miteinander gekoppelt bzw. aufeinander abgestimmt, insbesondere miteinander synchronisiert, ist.

Dadurch ist erreicht, dass durch ein Verschwenken eines Schwenkarmes der mit diesem bewegungsgekoppelte zweite Schwenkarm eine entsprechend gekoppelte Bewegung ausführt.

Durch eine Synchronisation der Bewegung der Schwenkarme ist erreicht, dass die Schwenkarme im Hinblick auf ihre Schwenkbewegung um die Schwenkachse aufeinander abgestimmt verbunden sind. Vor diesem Hintergrund ergibt sich die Vereinfachung dadurch, dass ein Benutzer lediglich einen Schwenkarm verschwenken muss, um die zur Ausbildung einer Bewegungsführung für die Fahrzeugheckklappe verwendeten Schwenkarme entsprechend abgestimmt bewegen zu können.

Die Bewegungskopplung der vorgenannten Schwenkarme hinsichtlich ihrer Schwenkbewegung um die Schwenkachse kann wiederum auf verschiedene Art und Weise erfolgen. Beispielsweise ist es möglich, Getriebe vorzusehen, mit denen eine Bewegungsabstimmung vorgenommen werden kann.

Eine weitere Möglichkeit der Bewegungskopplung besteht darin, dass die Kopplungsmittel wenigstens eine Strebe aufweisen, die wenigstens zwei der Schwenkarme miteinander verbindet. Vor diesem Hintergrund sind die Schwenkarme über die Strebe miteinander bewegungsgekoppelt.

Die Strebe kann dazu Stoff-, form- wie auch kraftschlüssig wie auch in einer beliebigen Kombination der vorgenannten Schlussarten miteinander verbunden sein. Insofern ist es möglich, die Strebe an den jeweiligen Schwenkarm anzubringen, u.a. mittels Kleb-, Schweiß-, Schraub-, Klemmverbindungsmöglichkeiten oder einer Kombination der Verbindungsmöglichkeiten miteinander zu verbinden.

Dazu berücksichtigt vorgenannte Weiterbildung insbesondere, dass wenigstens eine Strebe mit den wenigstens zwei Schwenkarmen stoff- und/oder form- und/oder kraftschlüssig miteinander verbunden ist.

Grundsätzlich kann die Strebe verschiedenartig angeordnet sein. Dazu ist vorzugsweise vorgesehen, dass wenigstens eine Strebe achsnah zur Schwenkachse angeordnet ist.

Unter einer achsnahen Anordnung einer Strebe zur Schwenkachse ist zu verstehen, dass der Abstand der Strebe zur Schwenkachse geringer ist als der Abstand der Strebe zu dem der Schwenkachse abgewandten freien Ende des wenigstens einen der Schwenkarme. Dabei ist ebenfalls eine Überdeckung zwischen Strebe und Schwenkachse umfasst.

Durch eine achsnahe Anordnung wird erreicht, dass bei abgenommener Fahrzeugheckklappe der Raum, des durch die Schwenkeinrichtung beanspruchten Raumes gering gehalten werden kann.

Insofern ergibt sich der Vorteil, dass bei abgenommener Fahrzeugheckklappe vom Fahrzeugheck ein lediglich geringer Zwangsabstand für Be-/Entladevorgänge durch die Schwenkeinrichtung entsteht, so dass ein nahezu barrierefreies Beladen bzw. Entladen wie auch Zugänglichkeit der Ladefläche des Fahrzeugs ermöglicht ist.

Des Weiteren entsteht der Vorteil, dass das Fahrzeugheck trotz abgenommener Fahrzeugheckklappe eine hohe Verwindungssteifigkeit und Stabilität bei gleichzeitig geringem Gewicht aufweist. Insofern muss eine Fahrzeugheckklappe nicht mehr als tragendes Bauteil für die Fahrzeugkarosserie ausgeführt sein. Dadurch entsteht ebenfalls der Vorteil, dass auch bei vom Fahrzeugheck entfernter Fahrzeugheckklappe eine ausreichende Stabilität eines Fahrzeugs gegeben ist.

Der Schwenkrahmen kann in vielfältiger Art und Weise ausgebildet sein. So kann dieser beispielsweise in seinem Längsquerschnitt geschlossen, wie auch offen gestaltet sei Der vorgenannte Querschnitt ergibt sich bei Anordnung des Schwenkrahmens am Fahrzeugheck zu einer in radialer wie ach axialer Richtung zur Schwenkachse erstreckten Ebene.

Grundsätzlich können der Schwenkarm/die Schwenkarme auf unterschiedliche Art und Weise gestaltet sein. So können diese in ihrem Querschnitt geschlossen wie auch halboffen, beispielsweise nach Art eines U-Profils, wie auch beispielsweise nach Art eines T- bzw. Doppel-T-Profils gestaltet sein. Der vorgenannte Querschnitt ergibt sich dabei quer zur Längserstreckung der Schwenkarme.

Darüber hinaus sind weitere Gestaltungsmöglichkeiten für den Schwenkarm bzw. Schwenkarme bzw. den Schwenkrahmen möglich.

Dem Gedanken folgend, die Anbringung der Fahrzeugheckklappe am Fahrzeugheck weitergehend zu vereinfachen, berücksichtigt vorgenannte vorteilhafte Weiterbildung insbesondere, dass die wenigstens zwei Schwenkarme, die mit wenigstens einer Strebe miteinander verbunden sind, einen, insbesondere U- förmigen, Schwenkrahmen bilden.

Eine derartige Formgebung des Schwenkrahmens führt zu einer steifen und nahezu barrierefreien Belademöglichkeit der Ladefläche des Fahrzeugs.

Daraus ergibt sich der Vorteil, dass die Fahrzeugheckklappe bei deren Anbringung am Fahrzeugheck einfacher zu handhaben ist. Der Schwenkrahmen bewirkt, dass die Ausrichtung der Fahrzeugheckklappe an dem Schwenkrahmen vereinfacht ist. Dadurch ist die Anbringung der Fahrzeugheckklappe durch lediglich eine Person weitergehend vereinfacht.

Dazu hat es sich, insbesondere im Hinblick auf den konstruktiven Aufwand, ebenfalls als vorteilhaft erwiesen, dass ein Fahrzeug einen Schwenkrahmen aufweist, der in seinem Längsquerschnitt U- formartig bzw. u-förmig gestaltet ist, dessen wenigstens zwei parallel zueinander angeordnete Schwenkarme zur Bildung der Bewegungsführung für die Fahrzeugheckklappe dienen, entlang derer die Fahrzeugheckklappe zu deren Anbringung am Fahrzeugheck zwischen Anfangsposition und Zielposition verschiebbar geführt ist.

Die Bewegungsführung fördert ebenfalls ein leichteres Abnehmen der Fahrzeugheckklappe vom Fahrzeugheck.

Die vorgenannte Weiterbildung führt zu dem Vorteil, dass es für ein Be- bzw. Entladung der Ladefläche des Fahrzeuges ebenfalls gelingt, den Abstand zur Ladefläche beispielsweise für einen Gabelstapler gering zu halten, sobald die Fahrzeugheckklappe vom Schwenkrahmen abgenommen ist.

Des Weiteren ergibt sich der Vorteil, dass sich der konstruktive Aufwand für die Realisierung eines Schwenkrahmens für ein Fahrzeug auf ein geringes Niveau zurückgeführt werden kann, so dass ebenfalls Kostenvorteile bei der Realisierung eines Fahrzeugs entstehen.

Unter einem Längsquerschnitt des Schwenkrahmens ist ein Querschnitt zu verstehen, der sich in Richtung der Längs- und Quererstreckung des Schwenkrahmens ergibt.

Die Längs- bzw. Quererstreckung des Schwenkrahmens ist bestimmt durch dessen jeweilige Außenabmessungen, die gegenüber der Tiefenerstreckung größer bemessen sind. Daher ergibt sich beispielsweise und insbesondere bei einer horizontalen Öffnungsstellung, in der die Fahrzeugheckklappe zu einer horizontalen Ebene ausgerichtet ist, ein Längsquerschnitt gemäß einer horizontalen Ebene.

Insofern ist es ein Vorteil, dass der Schwenkrahmen in seinem Längsquerschnitt zur Ladefläche des Fahrzeuges abgewandt geöffnet ist, um den vorgenannten Mindestabstand bei entnommener Heckklappe beispielsweise für einen Gabelstapler bzw. zur Be- bzw. Entladung der Ladefläche so gering wie möglich zu halten.

Ferner wird erreicht, dass die Öffnung, die am Fahrzeugheck für die Heckklappe vorgesehen ist, bei einem am Fahrzeugheck angeordneten Schwenkrahmen nur unwesentlich in ihren Abmessungen verringert wird. In diesem Zusammenhang ist es dabei ebenfalls möglich, am Fahrzeug befindliche Steighilfen/Tritte nutzen zu können, die bei einer am Fahrzeugheck angebrachten Fahrzeugheckklappe, insbesondere in deren Öffnungszustand, nicht nutzbar /zugänglich sind. Analoges gilt für die Schwenkarme, die nicht miteinander verbunden sind. Damit ergibt es sich, dass der Schwenkrahmen bzw. die Schwenkarme am Fahrzeug verbleiben können, ohne dass die Fahrzeugheckklappe am Fahrzeugheck angebracht ist.

Wie bereits ausgeführt, kann ein Schwenkrahmen eines Fahrzeuges auf verschiedene Art und Weise ausgeführt sein.

Beispielsweise ist es möglich, dass der Schwenkrahmen aus verschiedenen Streben gebildet ist, die beispielsweise miteinander verschraubt, verschweißt bzw. verklebt sind.

Daher ist es möglich, einen entsprechenden Schwenkrahmen eines Fahrzeugs durch kraft- bzw. stoff- bzw. formschlüssiges Verbinden von Streben bzw. Bestandteilen eines entsprechenden Schwenkrahmens zu erstellen.

Darüber hinaus ist es möglich, einen entsprechenden Schwenkrahmen eines Fahrzeuges als Gussteil auszuführen, beispielsweise als Metallgussteil bzw. Kunststoffspritzgussteil.

Um den Schwenkrahmen möglichst starr gestalten, ungewünschte Verformungen bei dessen Belastung möglichst unterbinden und die Herstellkosten bzw. den Aufwand zur Herstellung gering halten zu können, ist der vorgenannten Weiterbildung insbesondere vorgesehen, dass der Schwenkrahmen einstückig gebildet ist.

Vor diesem Hintergrund ergibt sich neben einer hohen Stabilität des Schwenkrahmens ebenfalls der Vorteil, dass die Handhabung beispielsweise für Instandhaltungsvorgänge vereinfacht ist.

Insofern kann ein Schwenkrahmen eines Fahrzeuges als Guss- bzw. Spritzgussteil ausgeführt sein. Des Weiteren ist es möglich, einen entsprechenden Schwenkrahmen als Schweißkonstruktion auszuführen, so dass die einzelnen Bestandteile des Schwenkrahmens miteinander verschweißt sind.

Ferner ist es möglich, den Schwenkrahmen als Umformteil zu realisieren, um somit in Umformprozessen von beispielsweise Profilkörpern einen Schwenkrahmen zu erstellen.

Daher kann ein Schwenkrahmen u.a. durch Um- wie auch Urformvorgänge, wie auch mittels Stoffschlüssiger Verbindungen, wie beispielsweise dem Löten, Kleben oder Schweißen, hergestellt werden.

Die Gestaltung eines entsprechenden Schwenkrahmens als einstückiges Bauteil führt zu dem Vorteil, dass die Herstellung eines Schwenkrahmens für ein Fahrzeug vereinfacht bzw. kostengünstig ist. Des Weiteren ist dessen Montage bzw. Demontage am Fahrzeug vereinfacht.

Bei der Materialauswahl kann ebenfalls auf unterschiedliche Materialien zurückgegriffen werden. Beispielsweise können Glasfaserwerkstoffe, Metalle wie auch Nichtmetalle und Kunststoffe zur Bildung von Schwenkarmen bzw. Streben wie auch Schwenkrahmen dienen.

Besonders geeignet sind aufgrund der geringen Kosten wie auch einer günstigen Verarbeitbarkeit und vorteilhafter Materialeigenschaften Metallwerkstoffe, die eine einfache Verarbeitbarkeit wie auch Verbindbarkeit begünstigen.

Daher ist es möglich, den Schwenkrahmen eines Fahrzeugs wenigstens abschnittsweise aus einem Metall, Kunststoff oder sonstigem geeigneten Werkstoff wie auch einer Kombination verschiedener Werkstoffe zu realisieren.

Um Beschädigungen an dem Fahrzeug wie auch an der Fahrzeugheckklappe weitergehend sicher zu vermeiden, sind Mittel zur Verschwenkbegrenzung vorgesehen, die die Verschwenkbarkeit wenigstens eines der Schwenkarme bzw. der Schwenkarme bzw. des Schwenkrahmens um die Schwenkachse begrenzen.

Die Mittel zur Verschwenkbegrenzung dienen dazu, eine Begrenzung des Verschwenkens des/der Schwenkarmes /Schwenkarme bzw. des Schenkrahmens bzw. der Fahrzeugheckklappe bei deren Anordnung am Fahrzeugheck wenigstens im Hinblick auf das Erreichen einer Öffnungsstellung zu realisieren.

Demgemäß ist vorteilhafterweise erreicht, dass eine Begrenzung der Schwenkbewegung der Fahrzeugheckklappe in Richtung der Öffnungsstellung auf einfache Art und Weise ermöglicht ist, so dass eine Endlage für die Fahrzeugheckklappe bei Erreichen einer vorbestimmten Öffnungsstellung vorgegeben bzw. voreingestellt werden kann.

Dadurch entsteht der Vorteil, dass eine unnötige Beschädigung des Fahrzeuges wie auch dessen Fahrzeugheckklappe bzw. Schwenkeinrichtung unterbleibt.

Des Weiteren ist vorteilhafterweise erreicht, dass durch eine Fahrzeugheckklappe in einer vorbestimmten Öffnungsstellung eine Vergrößerung der Ladefläche des Fahrzeuges realisierbar ist.

Ferner ist ermöglicht, dass verschiedenartige Fahrzeugheckklappenausführungen verwendet werden können, um das Fahrzeugheck eines Fahrzeuges zu gestalten bzw. die Ladefläche nutzen zu können, ohne dass die Mittel zur Schwenkbegrenzung dazu aufwändig angepasst werden müssten.

Auf einfache Art und Weise kann beispielsweise ein Seil, insbesondere ein Drahtseil, verwendet werden, das mit seinem einem freien Ende an der Fahrzeugkarosserie eines Fahrzeuges und mit seinem verbleibenden freien Ende an dem wenigstens einen Schwenkarm bzw. dem Schwenkrahmen angeordnet ist.

Es ist möglich, die Mittel zur Verschwenkbegrenzung optisch durch die Schenkarme wenigstens abschnittsweise, insbesondere in einer Schließstellung der Fahrzeugheckklappe, zu verbergen.

Eine Schwenkbewegungsbegrenzung für eine Fahrzeugheckklappe kann auf verschiedene Art und Weise realisiert sein. So ist es u.a. auch möglich, eine Schwenkbewegungsbegrenzung an der Schwenkachse der Fahrzeugheckklappe vorzusehen, beispielsweise, indem die betreffenden Scharniere/Gelenke, die ein Verschwenken der Fahrzeugheckklappe am Fahrzeugheck erlauben, dazu eingerichtet und ausgebildet sind, eine Verschwenkbarkeit der Fahrzeugheckklappe zu begrenzen.

Insofern berücksichtigt die vorgenannte Weiterbildung insbesondere, dass die Mittel zur Verschwenkbegrenzung wenigstens eine Strebe bzw. einen Gelenk-/Gliederstab bzw. ein Seil bzw. ein Band bzw. eine Kette aufweisen, dessen eines freie Ende fahrzeugkarosserieseitig und dessen verbleibendes freies Ende an wenigstens einem Schwenkarm, insbesondere zugfest, gehalten ist.

Vor diesem Hintergrund ist erreicht, dass der/die Schwenkarm/Schwenkarme bzw. der Schwenkrahmen in eine Stellung gebracht und gehalten werden kann, in der ein einfaches Anbringen bzw. Abnehmen der Fahrzeugheckklappe am/vom Fahrzeugheck eines Fahrzeugs ermöglicht ist.

Um die optische Qualität des Fahrzeuges nicht zu beeinträchtigen, ist in einer weiteren Weiterbildung vorgesehen, dass wenigstens einer der Schwenkarme, vorzugsweise beide Schwenkarme, bzw. der Schwenkrahmen wenigstens abschnittsweise in einem vorhandenen Spalt zwischen Fahrzeugheckklappe und Fahrzeugheckseitenteilen angeordnet ist, der im vorgenannten bereits erläutert wurde. Die Fahrzeugheckseitenteile begrenzen die Ladefläche quer zur Fahrzeuglängsachse.

Die Fahrzeuglängsachse ist dadurch gekennzeichnet, dass diese vom Fahrzeugheck zur Fahrzeugfront bzw. von den Hinterrädern des Fahrzeuges in Richtung der Vorderräder des Fahrzeuges gerichtet ist. Durch die Fahrzeuglängsachse ist ebenfalls die Fortbewegungsrichtung (vorwärts wie auch rückwärts) des Fahrzeugs bestimmt.

Durch die vorgenannte Weiterbildung ist ebenfalls erreicht, dass der/die Schwenkarm/Schwenkarme bzw. der Schwenkrahmen in Schließposition der Fahrzeugheckklappe nicht direkt ersichtlich ist und von der Fahrzeugklappe wenigstens abschnittsweise verdeckt ist, so dass diese/dieser für einen Betrachter des Fahrzeughecks nicht unmittelbar erkennbar ist bzw. nicht optisch auffällig bzw. ersichtlich am Fahrzeugheck ist/sind.

Dazu ist in einer weiteren Weiterbildung vorgesehen, dass der Schwenkarm/ die Schwenkarme bzw. der Schwenkrahmen derart gestaltet und am Fahrzeugheck angeordnet ist, dass der Schwenkarm/ die Schwenkarme bzw. der Schwenkrahmen durch eine Außenfläche der Fahrzeugheckklappe wenigstens abschnittsweise, insbesondere größtenteils, vorzugsweise vollständig, überdeckt ist/sind.

Neben optischen Vorteilen ist ebenfalls vorteilhafterweise erreicht, dass der Schwenkarm/ die Schwenkarme bzw. der Schwenkrahmen Funktionsträger an der Außenfläche der Fahrzeugheckklappe nicht unnötig in ihrer Funktion beeinträchtigt. Des Weiteren ist vorteilhafterweise erreicht, dass die Funktion der Fahrzeugheckklappe durch die Anordnung des Schwenkrahmens unbeeinträchtigt ist.

Eine Außenfläche der Fahrzeugheckklappe ist die Fläche der Fahrzeugheckklappe, die in deren Schließposition der Ladefläche bzw. den Laderaum des Fahrzeugs abgewandt ist.

Um die Fahrzeugheckklappe am Schwenkrahmen anordnen und relativ zu diesem bewegen zu können, sieht eine Weiterbildung vor, dass die zweiten Führungsmittel wenigstens einen, insbesondere drei, vorzugsweise vier, Führungsstift (e) aufweisen, von denen wenigstens ein Führungsstift an jeweils wenigstens einer der Seitenflanken der Fahrzeugheckklappe angeordnet sind, die mit den ersten Führungsmitteln für die translatorische Bewegungsführung zur Anbringung der Fahrzeugheckklappe am Fahrzeugheck zusammenwirken.

Auf diese Art ist es möglich, dass die Fahrzeugheckklappe am Schwenkrahmen durch entsprechend dafür vorgesehene Führungsmittel gehalten werden kann, um die Fahrzeugheckklappe entsprechend ausrichten bzw. positionieren zu können.

Dazu ist es ebenfalls möglich, die Fahrzeugheckklappe entsprechend auszuführen, um Führungsmittel entsprechend auszugestalten.

Um jedoch auch bereits bestehende Fahrzeuge mit der ursprünglichen Fahrzeugheckklappe umgestalten zu können, ist es möglich, bereits vorhandene Funktionsträger zu nutzen, um diese für ein Halten am Schwenkrahmen zu nutzen.

Insofern können u.a. Ausnehmungen, wie es u.a. Gewindelöcher bzw. -bohrungen sind, genutzt werden, um darin einen Stift bzw. eine Schraube zur Ausbildung eines Führungsstiftes einzubringen.

Dadurch entsteht weiterhin der Vorteil, dass die vorgenannte Schraube - wie auch ähnliche Verbindungs- /Befestigungsmittel - ebenfalls dazu verwendet werden kann, die Fahrzeugheckklappe am Schwenkrahmen eines Fahrzeuges fest zu halten bzw. zu fixieren.

Für ein sicheres Halten der Fahrzeugheckklappe am Fahrzeugheck können die Führungsmittel unterschiedlich ausgestaltet sein.

Grundlegend ist dabei ein Führungsstift ausreichend, bevorzugt ist jedoch die Verwendung von zwei wie auch vier Führungsstiften. Diese werden insbesondere an den Seitenflanken der Fahrzeugheckklappe angeordnet, die bei Anordnung der Fahrzeugheckklappe am Fahrzeugheck jeweils einer Fahrzeugseite zugewandt sind.

Analog können ebenfalls weitere Führungsmittel ausgestaltet sein.

Für weitere Kostenvorteile ist in einer weiteren Weiterbildung vorgesehen, dass die Fahrzeugheckklappe wenigstens mittels der zweiten Führungsmittel, insbesondere mittels wenigstens eines Führungsstiftes, an dem/den Schwenkarme /Schwenkarmen bzw. am Schwenkrahmen befestigbar ist.

Dadurch ist vorteilhafterweise erreicht, dass die Führungsmittel nicht nur der Funktion dienen, die Fahrzeugheckklappe an dem/den Schwenkarm/Schwenkarmen bzw. dem Schwenkrahmen führen zu können, sondern ebenfalls an dem Schwenkrahmen sicher zu halten.

Vor diesem Hintergrund ist vorteilhafterweise ebenfalls erreicht, dass keine zusätzlichen Mittel zum Halten der Fahrzeugheckklappe an den/dem Schwenkarm/Schwenkarmen bzw. dem Schwenkrahmen zwingend notwendig sind.

Dadurch kann wenigstens eines der zweiten Führungsmittel eine Doppelfunktion übernehmen, wodurch die Anzahl der notwendigen Einzelteile reduzierbar ist.

Für ein sicheres Halten der Fahrzeugheckklappe am Fahrzeugheck eines Fahrzeuges ist beispielsweise und insbesondere vorgesehen, dass wenigstens einer der Schwenkarme wenigstens eine Führungsnut aufweist, die mit den Führungsmitteln der Fahrzeugheckklappe derart zusammenwirkt, dass die translatorische Bewegungsführung der Fahrzeugheckklappe radial zur Schwenkachse gerichtet ist

Dazu ist die Führungsnut insbesondere derart eingerichtet und ausgebildet, dass die Führungsstifte oder ähnliches der Fahrzeugheckklappe, die die zweiten Führungsmittel bilden können, in Zielposition wenigstens abschnittsweise hineinragt und dabei wenigstens einen Bewegungsfreiheitsgrad der Fahrzeugheckklappe, insbesondere quer zur Längserstreckung des Schwenkarmes, reduziert.

Dadurch wird erreicht, dass ein sicheres Halten der Fahrzeugheckklappe an dem Schwenkarm/ an den Schwenkarmen bzw. am Schwenkrahmen gewährleistet ist. So kann beispielsweise die Nut in ihrem Verlauf L-förmig, T-förmig, C-förmig, U-förmig ausgebildet sein.

Weitere Formgebungen ergeben sich entsprechend sinngemäß.

Für eine einfache Positionierung der Fahrzeugheckklappe am Fahrzeugheck ist eine Positionierhilfe vorgesehen, die auf unterschiedliche Art und Weise gebildet sein kann. Sie dient dazu, die Zielposition, in der die Fahrzeugheckklappe zu Ihrer Funktionserfüllung bzw. Zweckbestimmung am Fahrzeugheck angeordnet ist, vorzugeben, damit eine aufwändige Ausrichtung der Fahrzeugheckklappe entfallen kann.

Sie kann auf einfache Art und Weise durch eine Wegbegrenzung der translatorischen Bewegungsführung, beispielsweise mittels eines Anschlags, realisiert werden, die eine Zielposition für die Fahrzeugheckklappe bildet.

Demgemäß sieht eine weitere Weiterbildung vor, dass die Schwenkeinrichtung, insbesondere die ersten Führungsmittel bzw. die zweiten Führungsmitteln, eine Positionierhilfe für die Anbringung der Fahrzeugheckklappe am Fahrzeugkeck, insbesondere einen Anschlag zur Wegbegrenzung der Fahrzeugheckklappe aufweist, durch den die Zielposition für die Fahrzeugheckklappe vorgegeben ist, wobei die Positionierhilfe vorzugsweise an wenigstens einer Führungsnut ausgebildet bzw. angeordnet ist.

Ein Fahrzeug kann auch derart gestaltet sein, dass ein bereits fertiggestelltes bzw. bestehendes wie auch gebrauchtes Fahrzeug durch eine mit ersten Führungsmitteln bzw. zweiten Führungsmitteln gebildete Schwenkeinrichtung nachgerüstet werden kann, ohne dass sich die Geometrie bzw. die äußere Formgebung des Fahrzeuges bzw. der Fahrzeugheckklappe Restriktionen zu unterwerfen ist, die einen hohen Änderungsaufwand bedeuten würden.

In diesem Zusammenhang ist es möglich, dass das Fahrzeug um erste Führungsmittel bzw. zweite Führungsmitteln nachgerüstet ist, wodurch diese einem bestehenden Fahrzeug nach dessen Fertigstellung nachträglich hinzugefügt worden sind.

Aufgrund dessen ergibt sich der Vorteil, dass ein bereits bestehendes, aus dem Stand der Technik bekanntes Fahrzeug auf einfache Art und Weise umwandelbar ist.

Die Erfindung wird nachfolgend anhand der beigefügten Zeichnung näher erläutert, in der Ausführungsbeispiele eines erfindungsgemäßen Fahrzeugs gezeigt sind.

Die Figuren der Zeichnung zeigen die Ausführungsbeispiele eines erfindungsgemäß gebildeten Fahrzeugs in jeweils einer schematischen Darstellung. Die Darstellungen sind daher insbesondere nicht maßstabsgetreu und zur besseren Übersicht auf die das Verständnis unterstützenden Elemente/Bauteile/Bestandteile reduziert.

In den Figuren sind gleiche oder sich entsprechende Bauteile/Bestandteile bzw. Elemente mit den gleichen Bezugszeichen versehen. Ferner wird zur besseren Übersicht die Beschreibung auf die Unterschiede zwischen den Darstellungen in den Figuren reduziert.

Es zeigt:
Fig. 1 ein erstes Ausführungsbeispiel eines erfindungsgemäßen Fahrzeugs in einer Seitenansicht in detailreduzierter schematischer Darstellungsweise, bei dem sich die Fahrzeugheckklappe in einer Schließstellung befindet,
Fig. 2 das Fahrzeug aus Fig. 1 mit einer Fahrzeugheckklappe in detailreduzierter schematischer Darstellungsweise, die in einer Öffnungsstellung befindlich ist, in einer ansonsten gleichen Darstellung wie Fig. 1
Fig. 3 das Fahrzeug aus Fig. 2 in der in Fig. 2 durch A gekennzeichneten Ansicht in detailreduzierter schematischer Darstellungsweise,
Fig. 4 einen Ausschnitt des in Fig. 2 gezeigten Fahrzeugs in detailreduzierter schematischer Darstellungsweise, der sich auf die Heckpartie des Fahrzeugs bezieht, wobei die Darstellung gegenüber der Fig. 2 um weitere Darstellungsdetails bereichert ist und die Fahrzeugheckklappe sich in einer Anfangsposition befindet,
Fig. 5 das in Fig. 4 dargestellte Fahrzeug in entsprechender Darstellungsweise wie in Fig. 4, bei der sich die Fahrzeugheckklappe in einer weiteren Anfangsposition befindet,
Fig. 6 das Fahrzeug aus den Fig. 4 und 5 in entsprechender Darstellungsweise wie in den vorgenannten Figuren, wobei sich die Fahrzeugheckklappe in einer Zielposition befindet,
Fig. 7 das Fahrzeug in einer Ansicht gemäß Fig. 3, wobei die Darstellung auf den Schwenkrahmen nebst Scharnierbestandteil in einer detailreduzierten schematischen Darstellung konzentriert ist,
Fig. 8 die in Fig. 7 dargestellte Ansicht des Schwenkrahmens mit einer daran in Zielposition angeordneten Fahrzeugheckklappe, die wiederum in einer detailreduzierten schematischen Darstellungsweise dargestellt ist,
Fig. 9 das Fahrzeug aus Fig. 1 in einer dort durch C gekennzeichneten Ansicht, wobei die Darstellung detailreduziert und schematisch ist und auf den Schwenkrahmen nebst Scharnierbestandteile und Fahrzeugheckklappe konzentriert ist,
Fig. 10 ein zweites Ausführungsbeispiel eines erfindungsgemäßen Fahrzeugs in einem Ausschnitt in Analogie gemäß dem in Fig. 2 gezeigten Fahrzeug wiederum in detailreduzierter schematischer Darstellungsweise analog zu Fig. 4, wobei sich der gezeigt Ausschnitt auf die Heckpartie des Fahrzeugs konzentriert und wobei sich die Fahrzeugheckklappe sich in einer Anfangsposition befindet,
Fig. 11 das in Fig. 10 dargestellte Fahrzeug in entsprechender Darstellungsweise wie in Fig. 10, bei der sich die Fahrzeugheckklappe in einer weiteren Anfangsposition befindet,
Fig. 12 das Fahrzeug aus den Fig. 10 und 11 in entsprechender Darstellungsweise wie in den vorgenannten Figuren, wobei sich die Fahrzeugheckklappe in einer Zielposition befindet,
Fig. 13 ein drittes Ausführungsbeispiel eines erfindungsgemäßen Fahrzeugs in einem Ausschnitt in Analogie gemäß dem in Fig. 2 gezeigten Fahrzeug wiederum in detailreduzierter schematischer Darstellungsweise, wobei sich der gezeigt Ausschnitt auf die Heckpartie des Fahrzeugs konzentriert und die Fahrzeugheckklappe in Annäherung einer konstruktiv vorgegebenen Öffnungsstellung ist,
Fig. 14 das in Fig. 13 dargestellte Fahrzeug in entsprechender Darstellungsweise wie in Fig. 13, bei der sich die Fahrzeugheckklappe bei Erreichen der Öffnungsstellung befindet,
Fig. 15 das erste Ausführungsbeispiel eines erfindungsgemäßen Fahrzeugs aus Fig. 1 in einer in Fig. 1 durch A gekennzeichneten Ansicht, wobei die Fahrzeugheckklappe in einer Schließstellung ist.

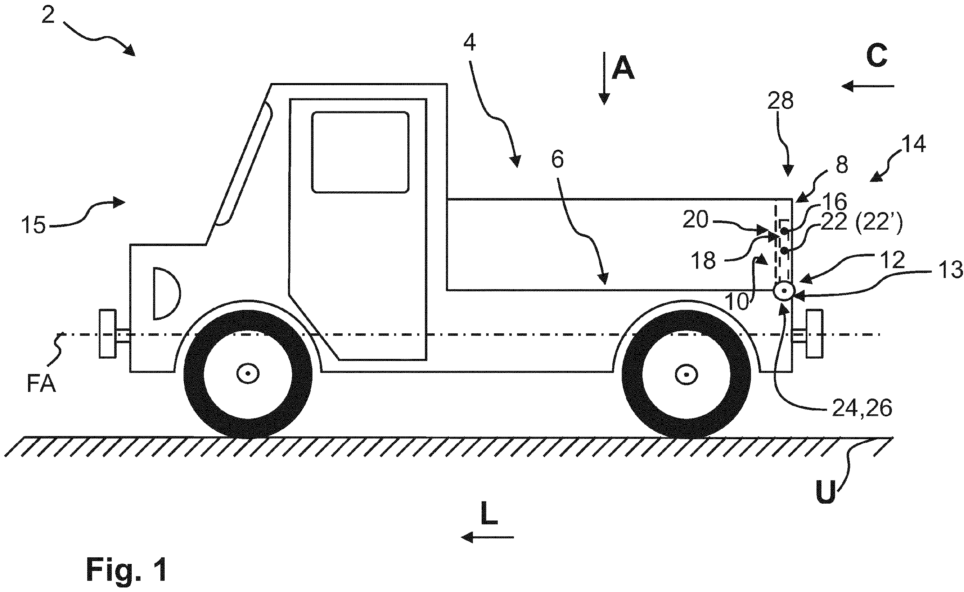

Fig. 1 zeigt ein erstes Ausführungsbeispiel eines erfindungsgemäß gebildeten Fahrzeugs 2, das ein sogenannter Pick-Up ist.

Das in Fig. 1 dargestellte Fahrzeug 2 weist eine sogenannte Pritsche 4 auf, wie sie bereits eingangs bezeichnet wurde, zur Ausbildung einer unüberdachten Ladefläche 6.

Zur heckseitigen Begrenzung der Ladefläche 6 weist das Fahrzeug 2 wiederum eine Fahrzeugheckklappe 8 auf, die mittels einer Schwenkeinrichtung 10 um eine Schwenkachse 12 zwischen einer Schließstellung, in der sie eine Ladefläche 6 des Fahrzeugs 2 heckseitig begrenzt, und eine Öffnungsstellung, in der sie die Ladefläche 6 heckseitig öffnet, am Fahrzeugheck 14 verschwenkbar angeordnet ist.

Die Schwenkachse 12 ist entlang der Ladekante 13 erstreckt und zu dieser parallel beabstandet.

Die Schwenkeinrichtung 10 weist zunächst erste Führungsmittel 16 auf, die am Fahrzeugheck 14 angeordnet sind und die mit zweiten Führungsmitteln 18, die an der Fahrzeugheckklappe 8 angeordnet sind, zur translatorischen Bewegungsführung der Fahrzeugheckklappe 8 zu deren Anbringung am Fahrzeugheck 14 zusammenwirken. Die Fahrzeugfront ist mit dem Bezugszeichen 15 kenntlich gemacht.

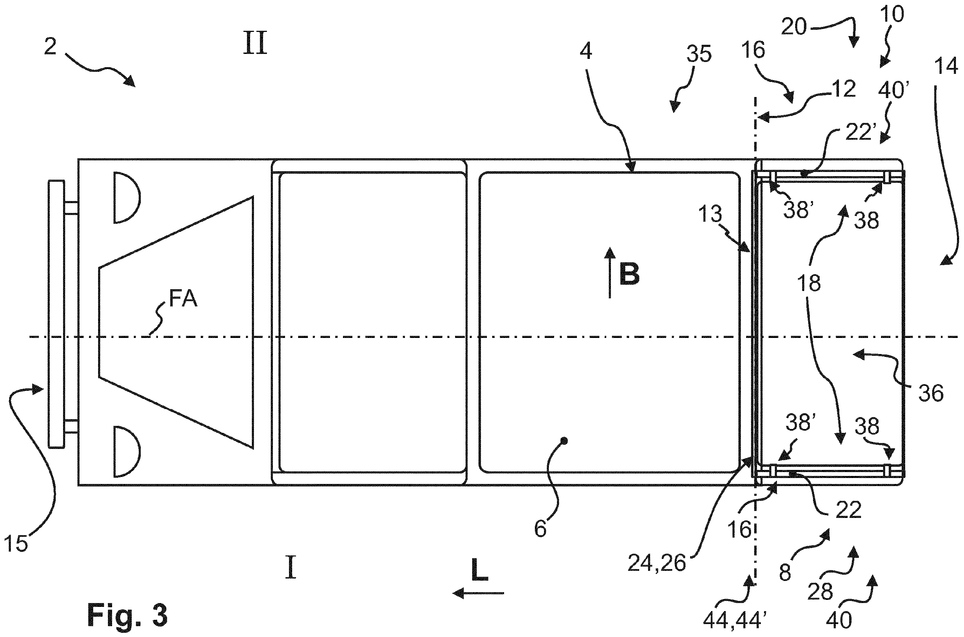

Die Fahrzeuglängsachse FA dient der leichteren Orientierung für die Anordnung der Bestandteiles des Fahrzeugs 2 und ergibt sich in Richtung vom Fahrzeugheck 14 zur Fahrzeugfront 15. Gleiches dient der Kennzeichnung der Breitenerstreckung B (siehe Fig. 3), in der die Fahrzeugheckklappe 8 wie auch eine entsprechende Öffnung für die Fahrzeugheckklappe 8 am Fahrzeugheck 14 in axialer Richtung zur Schwenkachse 12 erstreckt ist.

Das Zusammenwirken erfolgt derart, die Fahrzeugheckklappe 8 zwischen einer Anfangsposition und einer Zielposition bewegbar geführt ist. Die translatorische Bewegungsführung der Fahrzeugheckklappe ist bei dem Fahrzeug 2 derart eingerichtet und ausgebildet, dass die Fahrzeugheckklappe für dessen Anbringung in radialer Richtung zur Schwenkachse 12 durch die ersten Führungsmittel 16 in Zusammenwirken mit den zweiten Führungsmitteln 18 bewegungsgeführt ist.

In einer Anfangsposition sind die ersten Führungsmittel 16 und die zweiten Führungsmittel 18 einander zur translatorische Bewegungsführung der Fahrzeugheckklappe 8 am Fahrzeugheck 14 zugeführt.

Demgemäß ergibt sich für die Zielposition, dass Fahrzeugheckklappe 8 zu ihrer Funktionserfüllung bestimmungsgemäß am Fahrzeugheck 14 angeordnet ist und in dieser Anordnung mit Befestigungsmitteln (nicht gezeigt) an dem Fahrzeug befestigt werden kann.

Dazu sind die ersten Führungsmittel 16 und die zweiten Führungsmitteln 18 für die translatorische Bewegungsführung wenigstens abschnittsweise komplementär zueinander gebildet.

Des Weiteren ist durch die vorgenannte Anordnung der Führungsmittel 16, 18 zueinander erreicht, dass die ersten Führungsmittel 16 im Zusammenwirken mit den zweiten Führungsmitteln 18 eine wenigstens abschnittsweise lineare Führung 20 für die Anbringung der Fahrzeugheckklappe 8 am Fahrzeugheck 14 bilden.

Die ersten Führungsmittel 14 verfügen dabei über zwei um die Schwenkachse 12 schwenkbar am Fahrzeug 2 angeordnete Schwenkarme 22, 22', die jeweils radial zur Schwenkachse 12 längserstreckt sind und jeweils einen Führungsteil bilden, um mit den zweiten Führungsmitteln 18, die den weiteren Führungsteil der linearen Führung 20 bilden, für die translatorische Bewegungsführung der Fahrzeugheckklappe 8 zusammenwirken.

Dabei sind die Schwenkarme 22, 22' in Richtung der Schwenkachse 12 zueinander beabstandet angeordnet und durch Kopplungsmittel 24 derart miteinander bewegungsgekoppelt, dass deren jeweilige Schwenkbewegung um die Schwenkachse 12 aufeinander abgestimmt und in diesem Ausführungsbespiel eines erfindungsgemäßen Fahrzeugs 2 miteinander synchronisiert ist.

Für die Bewegungskopplung 24 weisen die Kopplungsmittel 24 wenigstens eine Strebe 26 auf, die die Schwenkarme 22, 22' mechanisch miteinander verbindet.

Die Strebe 24 ist dazu Stoffschlüssig mit den zwei Schwenkarmen 22, 22' verbunden.

Wie u.a. in Fig. 3 ersichtlich, bilden die zwei Schwenkarme 22, 22' zusammen mit der Strebe 26 einen u- förmigen Schwenkrahmen 28, bei dem mittels Schweißverbindungen die Strebe 26 und der Schwenkarme 22, 22' zu einem einstückigen Schwenkrahmen 28 miteinander verbunden sind.

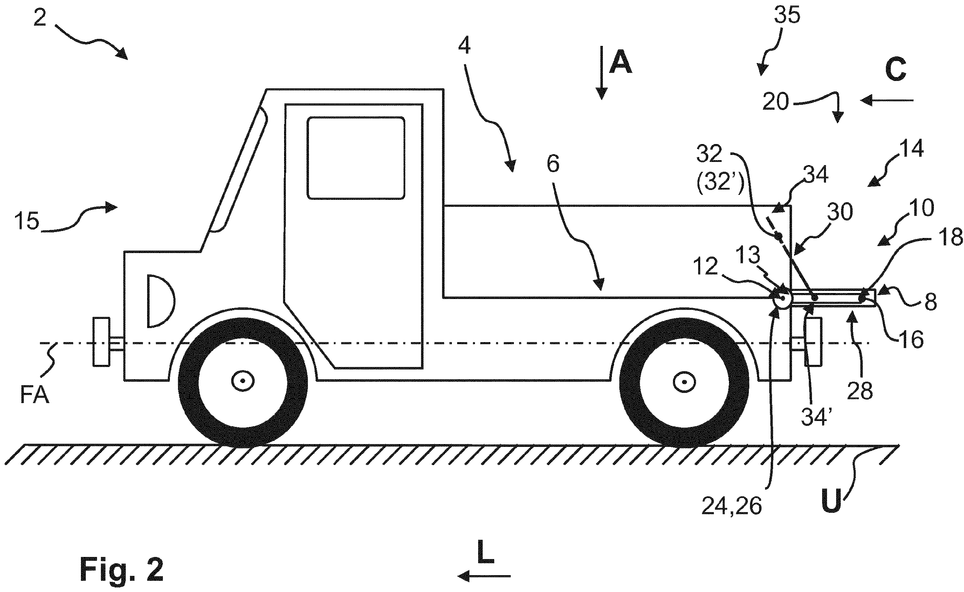

Fig. 2 zeigt das Fahrzeug 2 aus Fig. 1 wiederum in einer Seitenansicht wie auch in gleicher Darstellungsweise wie in Fig. 1.

Im Unterschied zur Fig. 1 befindet sich die Fahrzeugheckklappe 8 in einer Öffnungsstellung, in der Sie ein heckseitiges Be-/Entladen der Ladefläche 6 ermöglicht, wozu sie die Ladefläche 6 heckseitig öffnet und damit heckseitig zugänglich macht.

In der gezeigten Öffnungsstellung der Fahrzeugheckklappe 8 ist ersichtlich, sind die bei dem gezeigten Ausführungsbeispiel eines Fahrzeugs 2 Mittel zur Verschwenkbegrenzung 30 der Schwenkarme 22, 22' bzw. des Schwenkrahmens 28 vorgesehen, die bewirken, dass ein Verschwenken der Schwenkarme 22, 22' bzw. des Schwenkrahmens 28 zumindest in Richtung der Öffnungsstellung der Schwenkarme 22, 22' bzw. des Schwenkrahmens 28 begrenzt ist.

In Richtung der Schließstellung der Fahrzeugheckklappe 8 sehen die Mittel zur Verschwenkbegrenzung 30 Anschlagmittel vor (nicht gezeigt) vor, die ein Verschwenken der Fahrzeugheckklappe 8 über die Schließstellung hinaus verhindern.

Die konkrete Ausgestaltung von Anschlagmitteln für die Fahrzeugheckklappe 8 ist dem Fachmann bekannt und bedarf daher keiner weiteren Erläuterung.

Des Weiteren weisen die Mittel zur Verschwenkbegrenzung 30 zwei Seile 32, 32' auf, deren jeweils eines freie Ende 34 an einer Fahrzeugkarosserie 35 des Fahrzeugs 2 und dessen verbleibendes freies Ende 34' am Schwenkrahmen 28 angeordnet ist.

Dabei ist eines der Seile 32 an der einen Fahrseite I (siehe Fig. 3) und das weitere Seile 32' an der verbleibenden Fahrzeugseite II (siehe Fig. 3) angeordnet. Die jeweiligen freien Enden 34, 34' der Seile 32, 32' sind zur einfachen Übersicht mit den Bezugszeichen 34, 34' gekennzeichnet.

Grundlegend ist es ausreichend, nur eines der Seile 32, 32' zu verwenden, jedoch wird durch die gewählten zwei Seile 32, 32' die Belastbarkeit der Schwenkbegrenzung bzw. die Belastbarkeit der Fahrzeugheckklappe 8 erhöht.

Durch die Seitenansicht ist in Fig. 1 lediglich eines der Seile 32 sichtbar. Gleiches gilt für Bestandteile/Elemente, die an der in Fig. 2 nicht sichtbaren Fahrzeugseite II angeordnet bzw. nur von dieser erkennbar sind.

Fig. 3 zeigt das Fahrzeug 2 aus Fig. 1 und Fig. 2 in einer in Fig. 1 durch A gekennzeichneten Ansicht (Draufsicht).

In Fig. 3 ist ersichtlich, dass der Schwenkrahmen 28 derart eingerichtet und ausgebildet ist, dass die Fahrzeugheckklappe 8 zu deren Anbringung am Fahrzeug 2 zwischen einer Anfangsposition und einer Zielposition durch den Schwenkrahmen 28 verschiebbar geführt ist.

Dazu bilden die zwei parallel zueinander angeordneten Schwenkarme 22, 22' der ersten Führungsmittel 14 für die Anbringung der Fahrzeugheckklappe 8 am Fahrzeugheck 14 den Schwenkrahmen 28, entlang dem die Fahrzeugheckklappe 8 zu deren Anbringung am Fahrzeugheck 14 zwischen einer Anfangsposition und einer Zielposition verschiebbar geführt ist.

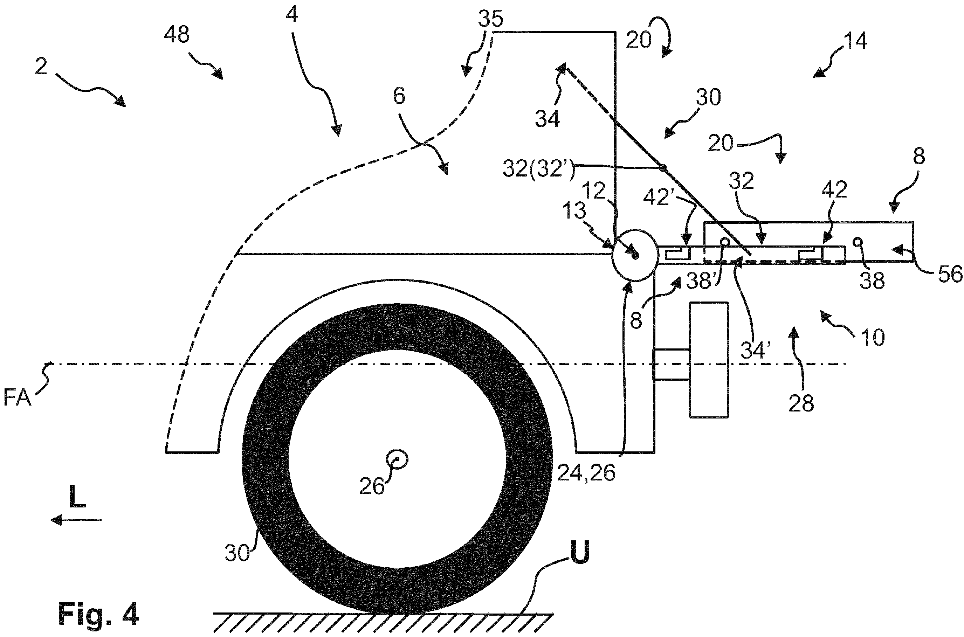

Die Anbringung der Fahrzeugheckklappe 8 ist anhand der Figuren 4 bis 6 näher veranschaulicht und wird im Weiteren näher anhand dieser Figuren erläutert.

Wie in Fig. 3 ersichtlich ist, ist der Schwenkrahmen 28 in seinem Längsquerschnitt der Ladefläche 6 des Fahrzeugs 2 abgewandt geöffnet. Die dadurch entstehende Öffnung 36 des Schwenkrahmens 28 ermöglicht es, dass die Ladefläche 6 des Fahrzeugs 2 besser zugänglich ist, in dem die durch eine in Öffnungsstellung der Fahrzeugheckklappe 8 vorgegebene Barriere bei vom Schwenkrahmen 28 entfernten Fahrzeugheckklappe 8 für die Zugänglichkeit zur Ladefläche 6 gering gehalten ist.

Damit die Fahrzeugheckklappe 8 am Schwenkrahmen 28 verschiebbar geführt ist, weisen bei dem Ausführungsbeispiel eines Fahrzeugs 2 zweiten Führungsmittel 18 vier Führungsstifte 38, 38' (pro Schwenkarm 22, 22' einheitlich mit dem Bezugszeichen 38, 38' gekennzeichnet) auf.

Diese sind an den Seitenflanken 40, 40' der Fahrzeugheckklappe 8 angeordnet, so dass die Fahrzeugheckklappe 8 über die zweiten Führungsmittel 18 bzw. Führungsstifte 38, 38' zu deren Anbringung am Fahrzeugheck 14 am Schwenkrahmen 28 verschiebbar ist.

Die Führungsstifte 38, 38' sind zur besseren Übersicht in den Figuren entsprechend durch die Bezugs Zeichens 38, 38' pro Schwenkarm 22, 22' gekennzeichnet.

Die Fahrzeugheckklappe 8 stützt sich über die vorgenannten zweiten Führungsmittel 18 bzw. die Führungsstifte 38, 38' am Schwenkrahmen 28 ab, so dass verhindert ist, dass die Fahrzeugheckklappe 8 aufgrund der wirkenden Schwerkraft sich in ungewünschter Weise dem Untergrund U nähert und dabei beschädigt wird.

Die zweiten Führungsmittel 18 weisen dabei einen Führungsstift 38' auf, über den die Fahrzeugheckklappe 8 am Schwenkrahmen 28 befestigbar ist, so dass diese an dem Schwenkrahmen 28 fixiert ist und ein ungewünschtes Bewegen der Fahrzeugheckklappe 8 relativ zum Schwenkrahmen 28 unterbunden ist.

Fig. 4 zeigt einen Ausschnitt des Fahrzeughecks 14 in einer zu den Figuren 1 und 2 analogen Seitenansicht des Fahrzeugs 2.

In Fig. 4 ist die Fahrzeugheckklappe 8 in einer Annäherungsposition dargestellt, in der die Fahrzeugheckklappe 8 dem Schwenkrahmen 28 zu deren translatorischen Bewegungsführung zugeführt wird.

Die Fahrzeugheckklappe 8 stützt sich dabei zur Vereinfachung der Anbringung am Fahrzeugheck 14 zunächst jeweils mittels eines Führungsstiftes 38', der - wie zuvor beschrieben - seitlich an der Fahrzeugheckklappe 8 angeordnet ist, am Schwenkrahmen 28 ab.

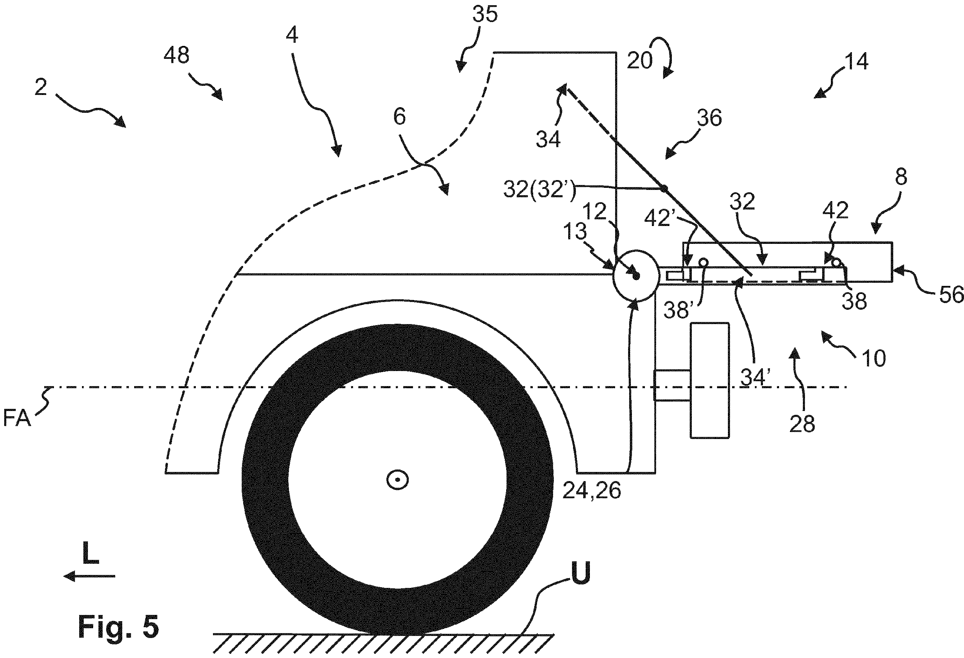

In Fig. 5 ist das Fahrzeug 2 aus Fig. 4 in gleicher Darstellungsweise, wie in Fig. 4 dargestellt. In der Darstellung in der Fig. 4 befindet sich die Fahrzeugheckklappe 8 in einer Anfangsposition, in der sie mittels der zweiten Führungsmittel 18 bzw. Führungsstifte 38, 38' am Schwenkrahmen 28 aufliegt bzw. sich daran abstützt.

In der Anfangsposition ist verhindert, dass die Fahrzeugheckklappe 8 sich in unkontrollierter Weise in Richtung der wirkenden Schwerkraft bewegt und sich damit dem Untergrund U nähert.

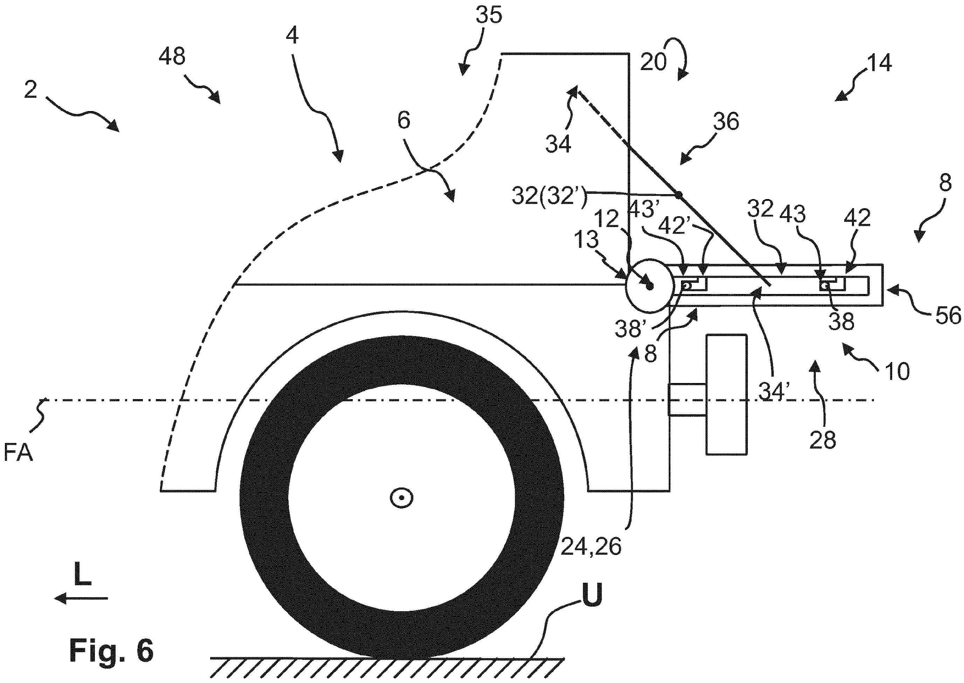

Fig. 6 zeigt das Fahrzeug 2 in gleicher Darstellungsweise wie in den Figuren 4 und 5.

Im Unterschied zu den vorgenannten Figuren befindet sich die Fahrzeugheckklappe 8 in einer Zielposition, in der die Fahrzeugheckklappe 8 die gewünschte Anordnung am Fahrzeugheck 14 erreicht, so dass die Fahrzeugheckklappe 8 am Schwenkrahmen 28 befestigt werden kann.

Für die Festlegung einer Zielposition für die Fahrzeugheckklappe 8 weisen die Schwenkarme 22, 22'jeweils zwei Führungsnuten 42, 42' auf, die jeweils derart eingerichtet und ausgebildet sind, dass in diese die Führungsstifte 38, 38' (bzw. ein Teil von diesen) bei Annäherung der Zielposition abschnittsweise hineinragen und dadurch die Bewegungsfreiheit der Fahrzeugheckklappe 8 um einen Bewegungsfreiheitsgrad der Fahrzeugheckklappe 8, hier quer bzw. vertikal zur Längserstreckung L eines jeweiligen Schwenkarmes 22, 22' reduzieren.

Sobald die Führungsstifte 38, 38' das Ende einer betreffenden Führungsnuten 42, 42' befindet sich die Fahrzeugheckklappe in Zielposition, so dass das jeweilige Ende einer Führungsnuten 42, 42' einen Anschlag 43, 43' zur Wegbegrenzung der Fahrzeugheckklappe 8 in einer Richtung bildet, durch den die Zielposition für die Fahrzeugheckklappe 8 vorgegeben ist.

Dadurch weist die Schwenkeinrichtung 10 bzw. die ersten Führungsmittel bzw. die zweiten Führungsmitteln 18, eine Positionierhilfe 43, 43' für die Anbringung der Fahrzeugheckklappe am Fahrzeugkeck auf. Zur Vereinfachung und besseren Übersicht ist die jeweilige Positionierhilfe 43, 43' mit den gleichen Bezugszeichen wie die Anschläge 43, 43' versehen. Die Anschläge (43, 43') sind auf gleiche Art und Weise realisierbar wie die vorgenannten Anschlagmittel.

Dabei kann die Zielposition der Fahrzeugheckklappe 8 auch durch einen Längenbereich gegeben sein, in dem sich die Fahrzeugheckklappe 8 zur Erreichung einer Zielposition bzw. zur bestimmungsgemäßen Anordnung zu befinden hat.

Dem folgend sind jeweils zwei Führungsstifte 38, 38' beabstandet zueinander an einer der Seitenflanken 42, 42' der Fahrzeugheckklappe 8 angeordnet, die mit den ersten Führungsmitteln 16 für die translatorische Bewegungsführung zur Anbringung der Fahrzeugheckklappe 8 am Fahrzeugheck 14 zusammenwirken.

Die gewählte Formgebung der jeweiligen Führungsnut 42, 42' ist derart gewählt, dass die Fahrzeugheckklappe 8 lediglich noch einen Bewegungsfreiheitsgrad zu dessen relativer Bewegung zum Schwenkrahmen 28 aufweist, so dass nur noch eine lineare Bewegung in Richtung der Längserstreckung 66 der Schwenkarme 22, 22' möglich ist, sobald die Führungsstifte 38, 38' in die Führungsnuten 42, 42' hineinragen.

Vor diesem Hintergrund ist vorteilhafterweise erreicht, dass die Fahrzeugheckklappe 8 in Zielposition auf einfache Art und Weise durch lediglich eine Person am Fahrzeugheck 14 befestigbar ist.

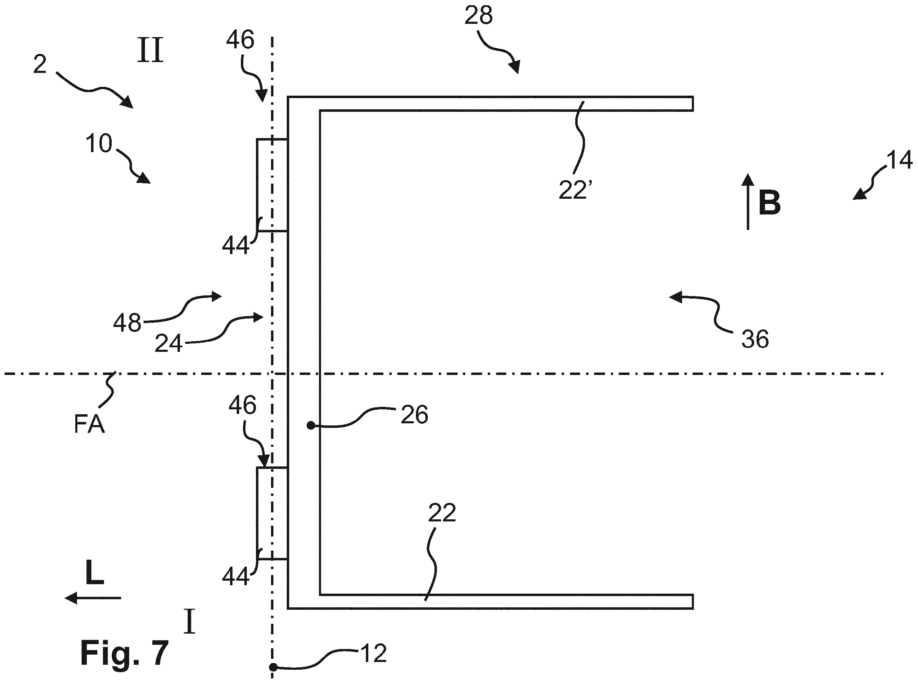

Fig. 7 zeigt das Fahrzeug 2 in einer detailreduzierten schematischen Darstellung, wobei die Darstellung auf den Schwenkrahmen 28 nebst daran angebrachten Scharnierteile 44 (zur besseren Übersicht einheitlich mit dem Bezugszeichen 44 gekennzeichnet) von Scharnieren 46 (zur besseren Übersicht einheitlich mit dem Bezugszeichen 46 gekennzeichnet) begrenzt ist.

Der Fig. 7 ist die Anordnung der parallel zueinander angeordneten Schwenkarme 22, 22' entnehmbar. Zur Realisierung einer Verschwenkmöglichkeit des Schwenkrahmens 28 am Fahrzeug 2 sind bei dem gezeigten Ausführungsbeispiel eines Fahrzeugs 2 zwei zueinander in axialer Richtung der Schwenkachse 32 beabstandete Scharniere 46 vorgesehen, von denen jeweils ein Scharnierteil 44 an der Strebe 26 des Schwenkrahmens 28 angeordnet ist. Die Strebe 26 ist an einer der Ladefläche 6 zugewandten Seite 48 des Schwenkrahmens 28 und damit achsnah zur Schwenkachse 12 angeordnet.

Mittels der Strebe 26 des Schwenkrahmens 28 sind die Schwenkarme 22, 22' des Schwenkrahmens 28 miteinander verbunden, wodurch der Schwenkrahmen 28 in seinem Längsquerschnitt u-formartig geformt ist.

Dabei ist die Strebe 26 mit den Schwenkarmen 22, 22' des Schwenkrahmens 28 verschweißt, so dass der verwendet Schwenkrahmen 28 einstückig ausgeführt ist.

Die an der Strebe 26 des Schwenkrahmens 28 angeordneten Scharnierteile 44 des jeweiligen Scharniers 46 dienen dazu, dass diese in Zusammenwirken mit einem jeweils weiteren am Fahrzeugheck 14 angeordneten Scharnierteil (nicht gezeigt) ein Verschwenken der Fahrzeugheckklappe 8 am Fahrzeugheck 14 bzw. der Schwenkarme 22, 22' bzw. des Schwenkrahmens 28 um eine Schwenkachse 12 ermöglichen.

Die Realisierung eines entsprechenden Scharniers 46, das in den Figuren einheitlich mit dem Bezugszeichen 46 versehen ist, ist dem Fachmann bekannt, so dass es an dieser Stelle keiner weiteren Erläuterung bedarf.

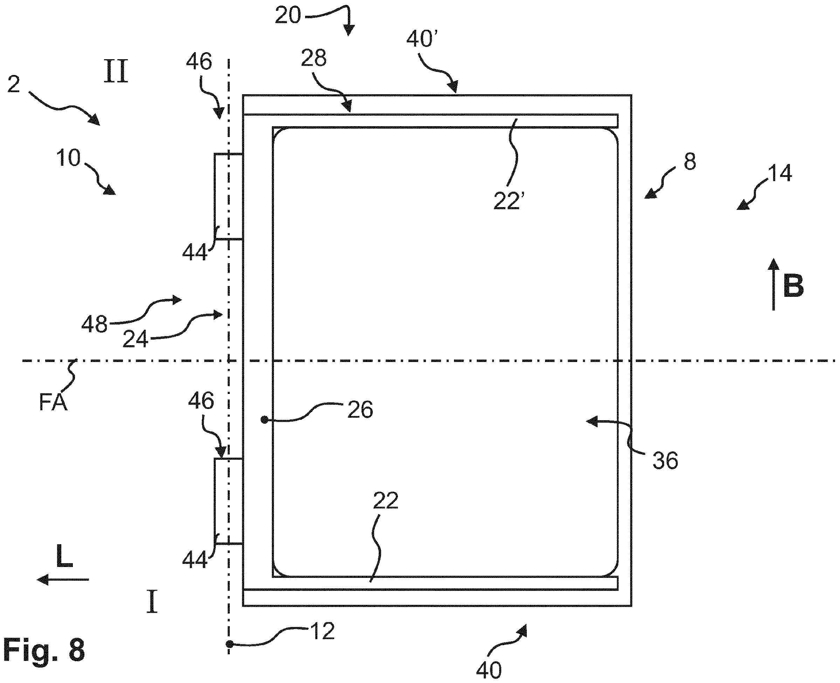

Fig. 8 zeigt das Fahrzeug 2 in gleicher Darstellungsweise wie in Fig. 7. Im Unterschied zur Darstellung in der Fig. 7 ist an dem Schwenkrahmen 28 die Fahrzeugheckklappe 8 angeordnet, wobei sich der Schwenkrahmen 28 bzw. die Fahrzeugheckklappe 8 in einer Zielposition befinden.

Der Fig. 8 ist zu entnehmen, dass der Schwenkrahmen 28 derart gestaltet und am Fahrzeugheck 14 angeordnet ist, dass wenigstens die Schwenkarme 22, 22' des Schwenkrahmens 28 zur Bewegungsführung der Fahrzeugheckklappe 8 für deren Anbringung am Fahrzeugheck 14 bzw. die Schwenkarme 22, 22' bzw. der Schwenkrahmen 28 durch die Außenfläche 58 der Fahrzeugheckklappe 8 überdeckt ist.

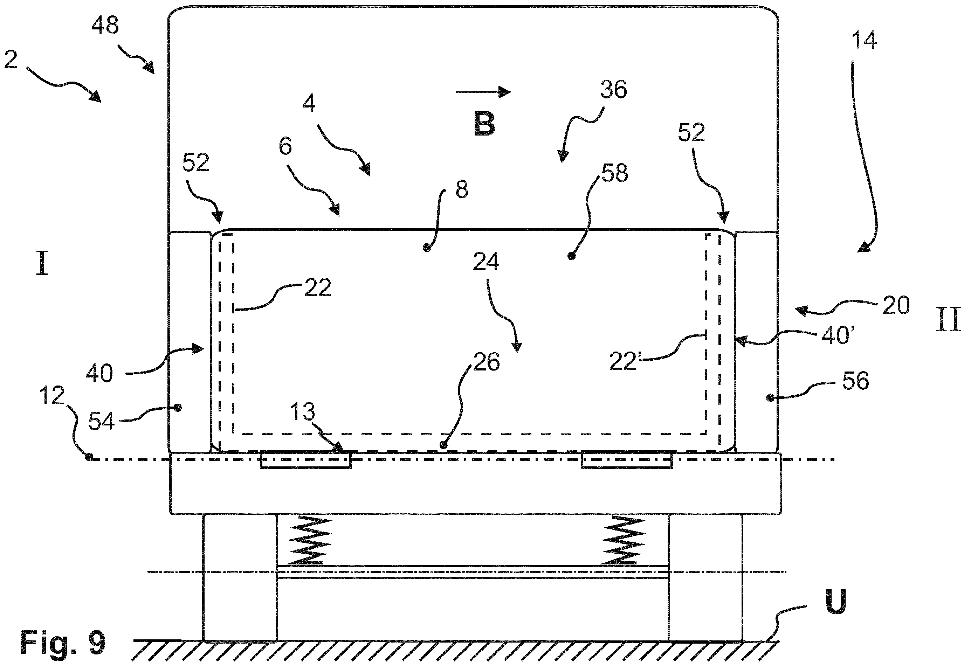

Die Außenfläche 58 der Fahrzeugheckklappe 8 ist bei deren Anbringung am Fahrzeug 2 dem Schwenkrahmen 28 abgewandt angeordnet, wie dies ebenfalls der Fig. 9 zu entnehmen ist.

In Fig. 9 ist das Fahrzeugheck 14 des Fahrzeugs 2 in einer Ansicht dargestellt, die in Fig. 1 durch C gekennzeichnet ist.

Dieser Darstellung ist wiederum zu entnehmen, dass die Außenfläche 58 der Fahrzeugheckklappe 8 in deren Schließstellung der Ladefläche 6 des Fahrzeugs 2 bzw. der Fahrzeugfront 15 abgewandt ist.

Die Außenfläche 58 der Fahrzeugheckklappe 8 überdeckt den Schwenkrahmen 28 vollständig, so dass dieser in Schließstellung der Fahrzeugheckklappe 14 von außen (außerhalb des Fahrzeugs 2) nicht sichtbar ist.

Des Weiteren ist der Fig. 9 entnehmbar, dass der Schwenkrahmen 28 in einem Spalt (freier Bauraum) 52 zwischen Fahrzeugheckklappe 8 und Fahrzeugheckseitenteilen 54, 56 angeordnet ist.

Neben optischen Vorzügen ist es dadurch u.a. ermöglicht, dass die Schwenkeinrichtung 10 einem bereits bestehenden Fahrzeug 2 nachgerüstet werden kann, so dass ein bereits bestehendes Fahrzeug zur Bildung eines erfindungsgemäßen Fahrzeugs 2 mit den entsprechenden Bestandteilen nachgerüstet werden kann

Die Spalt 52 wird bei diesem Ausführungsbeispiel eines erfindungsgemäß gebildeten Fahrzeugs 2 durch die Außenfläche 58 der Fahrzeugheckkappe 8, die der Fahrzeugfront 15 bzw. der Ladefläche 6 abgewandt und nach außerhalb des Fahrzeugs 2 gerichtet ist, überdeckt.

Für die Anbringung der Fahrzeugheckklappe 8 an den/dem Schwenkarm/Schwenkarmen 22, 22' bzw. dem Schwenkrahmen 8 ist es möglich, bereits bestehende Löcher, Gewindelöcher, Bolzen, Nuten, Sicken und dergleichen wie auch entsprechende Funktionsträger der Fahrzeugheckklappe 8 zu verwenden.

Ferner ist es möglich, die Fahrzeugheckklappe 8 mit o.g. Merkmalen zu ergänzen, wobei dessen grundsätzliche Gestaltung und Formgebung unberührt bleibt.

Bei dem in den Figuren dargestellten Ausführungsbeispiel eines Fahrzeugs 2 ist der Schwenkrahmen 28 ein nachgerüsteter Schwenkrahmen 28, wobei vorteilhafter Weise die Geometrie des verwendeten bestehenden Fahrzeugs 2 bzw. der Fahrzeugheckklappe 8 für die Verwendung des Schwenkrahmens 28 nicht umgestaltet werden musste.

Bei den vorgenannten Beispielen bilden die ersten Führungsmittel in Zusammenwirken mit den zweiten Führungsmittel eine Gleitlagerführung für die translatorische Bewegungsführung aus.

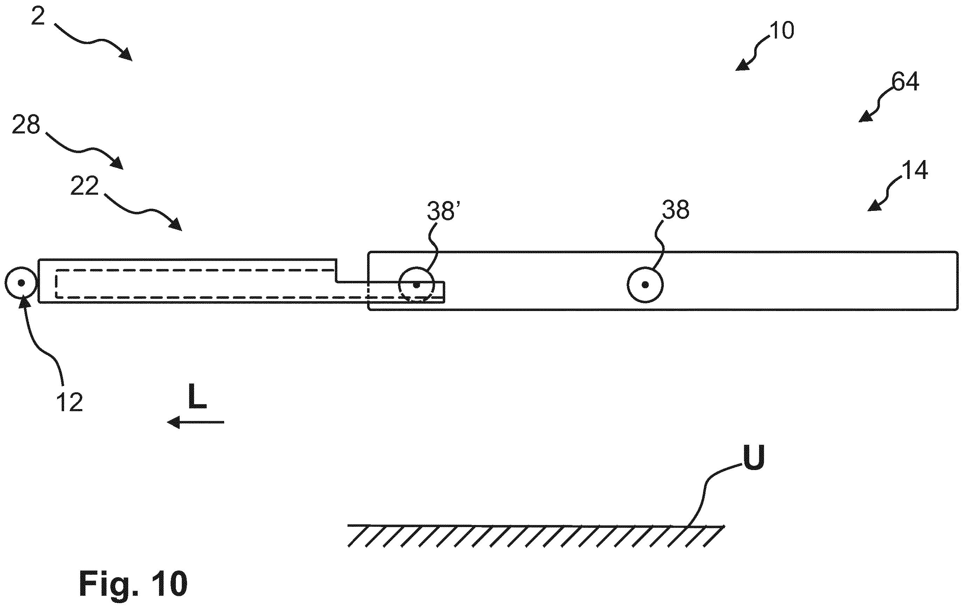

In Fig. 10 bis Fig. 12 ist ein weiteres Ausführungsbeispiel eines Fahrzeugs gezeigt, bei dem im Unterschied zu den vorgenannten Ausführungsbeispielen die ersten Führungsmittel in Zusammenwirken mit den zweiten Führungsmittel eine Rollenführung 64 für die translatorische Bewegungsführung ausbilden, während bei den zuvor genannten Beispielen eine Gleitlagerführung verwendet wurde. Die Rollenführung ist dabei nach Art einer Teleskopschienenführung gebildet.

Zur Ausbildung der Rollenführung 64 sind die Führungsstifte 38, 38' der Gleitlagerführung ersetzt worden durch Führungsrollen 38, 38', die aufgrund ihrer Äquivalenz zu den Führungsstiften 38, 38' mit den gleichen Bezugszeichen 38, 38' versehen sind.

In den Figuren 10 bis 12 ist die Darstellung des Ausführungsbeispiels eines Fahrzeugs 2 folgt der Darstellungsart in den Figuren 4 bis 6 in einer zur besseren Übersicht weitergehend detailreduzierten Darstellungsweise, in dem die Darstellung auf die Heckpartie konzentriert ist, bei der die Schwenkeinrichtung 10 ausschnittsweise anhand der Schwenkarme 22, 22' des Schwenkrahmes 28 verdeutlicht ist. Von den Schwenkarmen 22, 22' ist aufgrund der gewählten Ansicht ein Schwenkarm 22 stellvertretend für den weiteren Schwenkarm 22' gezeigt.

Die Fahrzeugheckklappe 8 ist in Fig. 10 in einer Annäherungsposition dargestellt, in der die Fahrzeugheckklappe 8 dem Schwenkrahmen 28 zu deren translatorischen Bewegungsführung zugeführt wird.

Die Fahrzeugheckklappe 8 stützt sich dabei zur Vereinfachung der Anbringung am Fahrzeugheck 14 zunächst jeweils mittels einer Rolle 38', die - wie zuvor anhand der Führungsrollen 38, 38' beschrieben wurde - seitlich an der Fahrzeugheckklappe 8 angeordnet ist, am Schwenkrahmen 28 ab.

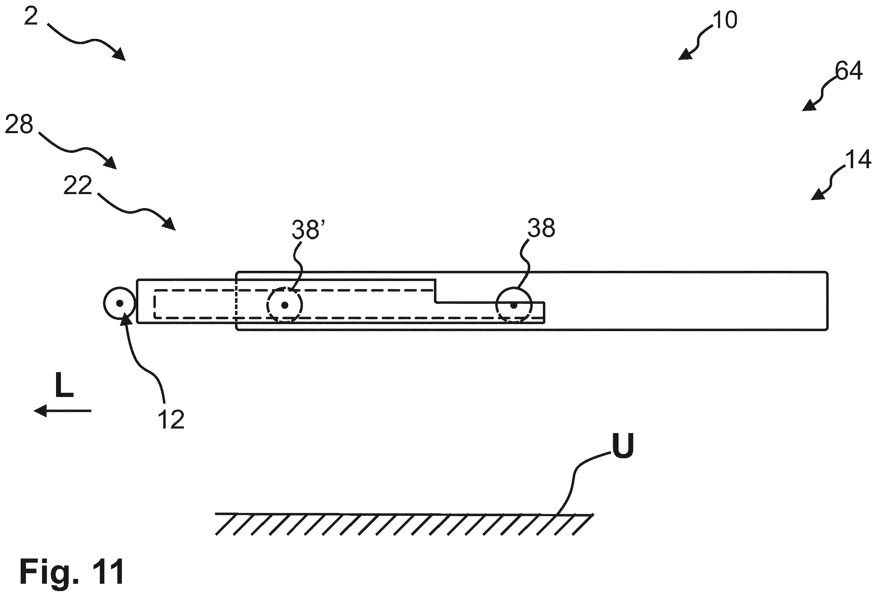

In Fig. 11 ist das Fahrzeug 2 aus Fig. 10 in gleicher Darstellungsweise, wie in Fig. 11 dargestellt. In der Darstellung in der Fig. 11 befindet sich die Fahrzeugheckklappe 8 in einer Anfangsposition, in der sie mittels der zweiten Führungsmittel 18 bzw. Führungsrollen 38, 38' am Schwenkrahmen 28 aufliegt bzw. sich daran abstützt.

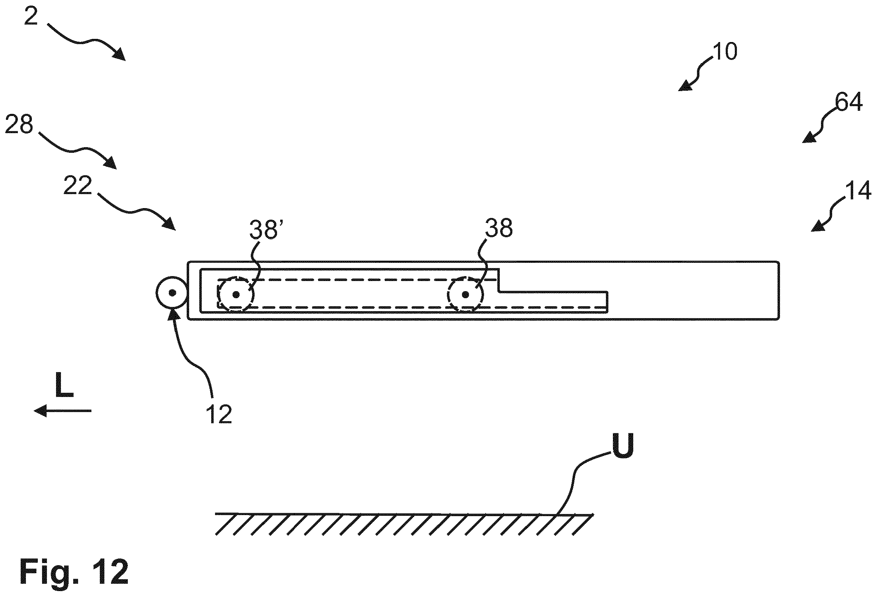

Fig. 12 zeigt das Fahrzeug 2 in gleicher Darstellungsweise wie in den Figuren 10 und 11.

Im Unterschied zu den Darstellungen in Figuren 10 und 11 befindet sich die Fahrzeugheckklappe 8 in einer Zielposition, in der die Fahrzeugheckklappe 8 die gewünschte Anordnung am Fahrzeugheck 14 erreicht, so dass die Fahrzeugheckklappe 8 am Schwenkrahmen 28 befestigt werden kann.

Die Vorgabe einer Zielposition für die Fahrzeugheckklappe 8 erfolgt wiederum mittels der bereits beschriebenen Anschläge 43, 43'. Der weitere Aufbau folgt den zuvor beschriebenen Ausführungsbeispielen eines Fahrzeugs 2.

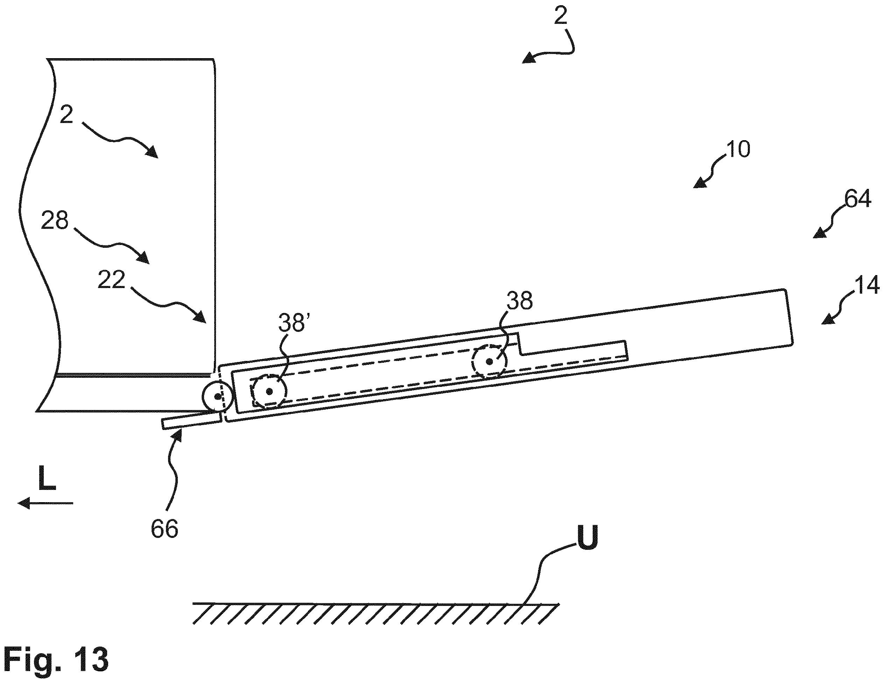

Fig. 13 zeigt ein drittes Ausführungsbeispiel eines Fahrzeugs 2 in einem Ausschnitt, der analog zur Darstellung in Fig. 2 gewählt wurde. Der gezeigte Ausschnitt des Fahrzeughecks 14 des Fahrzeugs 2 konzentriert und die Fahrzeugheckklappe 8 in einer Öffnungsstellung. Im Unterschied zu der zuvor beschriebenen und dargestellten Lösungsmöglichkeit einer Verschwenkbegrenzung 30 ist vorgesehen, die Verschwenkbegrenzung 30 für die Bestimmung der Öffnungsstellung der Fahrzeugheckklappe 8 achsnah zur Schwenkachse 12 vorzusehen. Bei der gezeigten Lösungsvariante ist ein Begrenzungsglied 66 an der Schwenkachse 12 vorgesehen, das in Zusammenwirken mit dem Fahrzeugheck 14 die Verschwenkbarkeit für die Vorbestimmung einer Öffnungsstellung begrenzt.

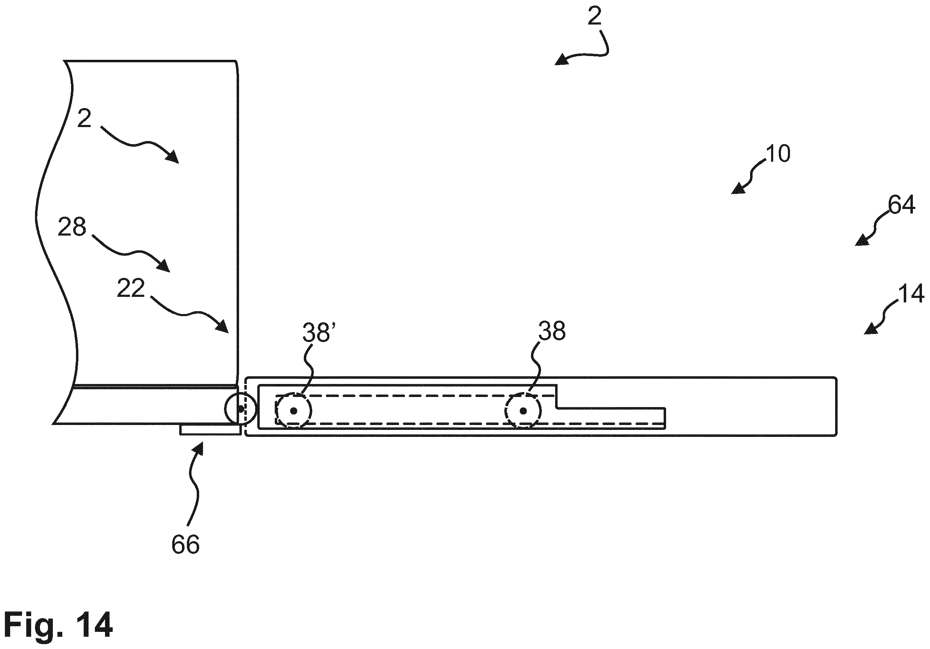

Fig. 14 zeigt wiederum das in Fig. 13 dargestellte Fahrzeug 2, bei der sich die Fahrzeugheckklappe 8 bei Erreichen einer Öffnungsstellung befindet.

In Anlehnung an die gezeigten Lösungsmöglichkeiten für die Realisierung einer Verschwenkbegrenzung für die Fahrzeugheckklappe existieren weitere Möglichkeiten, die gleiche Wirkung zeigen. So kann die Verschwenkbegrenzung auch durch eine Schwenkführungsnut erstellt sein, in die ein Begrenzungsglied wenigstens abschnittsweise eingreift, so dass in Zusammenwirken mit der Schwenkführungsnut eine Öffnungsstellung für die Fahrzeugheckklappe vorbestimmt ist.

Die vorgenannten Figuren zeigen, dass es vielfältige Möglichkeiten der Realisierung eines Fahrzeugs gibt. Die vorgenannten Ausführungen kennzeichnen dazu lediglich erste Möglichkeiten der Ausgestaltung.

Im Rahmen der Erfindung ist ebenfalls vorgesehen, dass zur Befestigung der Fahrzeugheckklappe am Schwenkrahmen Führungsmittel bzw. Befestigungsmittel vorgesehen sind, die ein werkzeugloses Anbringen bzw. Entfernen der Fahrzeugheckklappe vom Fahrzeugheck bzw. vom Schwenkrahmen ermöglichen.

Dadurch ergibt sich eine weitere Vereinfachung in der Handhabung einer Fahrzeugheckklappe bei einem erfindungsgemäß gebildeten Fahrzeugs. Beispielsweise kann ein Führungsstift als federbelasteter Führungsstift ausgebildet sein, der in axialer Richtung verschiebbar an der Fahrzeugheckklappe angeordnet ist und in eine Ausnehmung an einem der Schwenkarme eingreifen kann, um eine Feststellung der Fahrzeugheckklappe an der Schwenkeinrichtung ermöglicht ist.

Des Weiteren ermöglicht die Erfindung, dass die eine Fahrzeugheckklappe durch eine weitere bzw. weitere unterschiedlich gestaltete Fahrzeugheckklappe (n) ersetzbar ist, die gegenüber der erstgenannten Fahrzeugheckklappe beispielsweise unterschiedliche Funktionsträger aufweisen bzw. unterschiedlich gestaltet sein kann/können, um ein erfindungsgemäß gebildetes Fahrzeug in vielfacher und einfacher Art und Weise umzugestalten und die Nutzbarkeit eines erfindungsgemäßen Fahrzeugs zu vergrößern zu können.

Wie eingangs bereits genannt, ermöglicht es die Erfindung, verschiedenartige Fahrzeugheckklappen zu verwenden und diese einfach und schnell austauschen zu können. Dabei kann auch die Fahrzeugheckklappe durch ein Netz bzw. Haltegurte ersetzt werden, das insbesondere an einem Schwenkarm bzw. an den Schwenkarmen bzw. am Schwenkrahmen, vorzugsweise abnehmbar, angeordnet werden kann

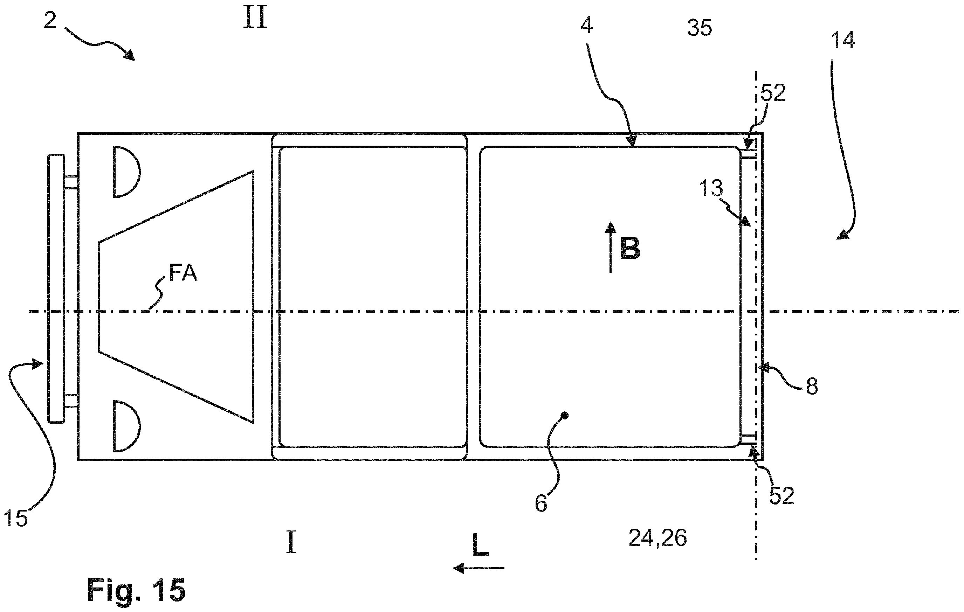

Im Rahmen der Erfindung ist ebenfalls umfasst, dass die Ladefläche für vielfältige Zwecke vorgesehen sein kann. Dazu ist es beispielsweise ebenfalls möglich, die Ladefläche für die Beförderung von Personen vorzusehen und beispielsweise auf der Ladefläche Sitzgelegenheiten anzuordnen. Des Weiteren ist im Rahmen der Erfindung umfasst, dass die Ladefläche durch ein Fahrzeugdach wenigstens abschnittsweise überdacht ist. Fig. 15 zeigt das erste Ausführungsbeispiel eines erfindungsgemäßen Fahrzeugs aus Fig. 1 in einer in Fig. 1 durch A gekennzeichneten Ansicht, wobei die Fahrzeugheckklappe 8 in einer Schließstellung ist. Dadurch durch der vorhandene Spalt 52, in dem der der Schwenkrahmen 28 angeordnet ist, verdeutlicht werden. Die Darstellung ist zur besseren Übersicht weitergehend detailreduziert und zeugt daher nicht alle Bestandteile.

## Patentansprüche

1. Fahrzeug (2), insbesondere Kraftfahrzeug,
mit einer Fahrzeugheckklappe (8), die mittels einer Schwenkeinrichtung (10) um eine Schwenkachse (12) zwischen einer Schließstellung, in der sie eine Ladefläche (6) des Fahrzeugs (2) heckseitig begrenzt, und einer Öffnungsstellung, in der sie die Ladefläche (6) heckseitig öffnet, am Fahrzeugheck (14) verschwenkbar angeordnet ist,
wobei
die Schwenkeinrichtung (10) erste Führungsmittel (16), die am Fahrzeugheck (14) angeordnet sind und mit zweiten Führungsmitteln (18), die wiederum an der Fahrzeugheckklappe (8) angeordnet sind, zur translatorischen Bewegungsführung der Fahrzeugheckklappe (8) zu deren Anbringung am Fahrzeugheck (14) derart zusammenwirken,
die Fahrzeugheckklappe (8) zwischen einer Anfangsposition, bei der die ersten Führungsmittel (16) und die zweiten Führungsmittel (18) einander zur translatorische Bewegungsführung der Fahrzeugheckklappe (8) zugeführt sind, und einer Zielposition, in der die Fahrzeugheckklappe (8) bestimmungsgemäß am Fahrzeugheck (14) angeordnet ist, bewegbar geführt ist und
die zweiten Führungsmittel (18) an den Seitenflanken (40, 40') der Fahrzeugheckklappe (8) angeordnet sind und die ersten Führungsmittel (16) wenigstens zwei zueinander in axialer Richtung der Schwenkachse (12) beabstandet und um die Schwenkachse (12) schwenkbar am Fahrzeugheck (14) angeordnete Schwenkarme (22, 22') aufweisen, die radial zur Schwenkachse (12) längserstreckt sind und jeweils einen Führungsteil bilden, der mit den zweiten Führungsmitteln (18) für die translatorische Bewegungsführung der Fahrzeugheckklappe (8) zusammenwirkt,
**dadurch gekennzeichnet, dass**
der wenigstens eine Schwenkarm (22, 22') wenigstens abschnittsweise in einem Spalt (52) zwischen Fahrzeugheckklappe (8) und Fahrzeugheckseitenteilen (54, 56) angeordnet ist.

2. Fahrzeug nach Anspruch 1, **dadurch gekennzeichnet, dass** die ersten Führungsmittel (16) und die zweiten Führungsmitteln (18) für die translatorische Bewegungsführung wenigstens abschnittsweise komplementär zueinander gebildet sind.

3. Fahrzeug nach Anspruch 1 oder 2, **dadurch gekennzeichnet, dass** die ersten Führungsmittel (16) im Zusammenwirken mit den zweiten Führungsmitteln (18) eine wenigstens abschnittsweise lineare Führung (20) für die Anbringung der Fahrzeugheckklappe (8) am Fahrzeugheck (14) bilden.

4. Fahrzeug nach einem der vorhergehenden Ansprüche, **dadurch gekennzeichnet, dass** die ersten Führungsmittel (16) mit den zweiten Führungsmittel (18) zum Zusammenwirken nach Art einer Gleitlagerführung bzw. Rollenführung (64) bzw. kugelgelagerte Führung für die translatorische Bewegungsführung eingerichtet und ausgebildet sind.

5. Fahrzeug nach einem der vorhergehenden Ansprüche, **dadurch gekennzeichnet, dass** die ersten Führungsmittel (16) im Zusammenwirken mit den zweiten Führungsmitteln (18) zur Bildung einer Teleskopschienenführung eingerichtet und ausgebildet sind.

6. Fahrzeug nach einem der vorhergehenden Ansprüche, **dadurch gekennzeichnet, dass** die wenigstens zwei der Schwenkarme (22, 22') durch Kopplungsmittel (24) derart miteinander bewegungsgekoppelt sind, dass deren jeweilige Schwenkbewegung um die Schwenkachse (12) aufeinander abgestimmt, insbesondere miteinander synchronisiert, ist.

7. Fahrzeug nach Anspruch 6, **dadurch gekennzeichnet, dass** die Kopplungsmittel (24) wenigstens eine Strebe (26) aufweisen, die die wenigstens zwei der Schwenkarme (22, 22') miteinander verbindet und insbesondere die wenigstens eine Strebe (26) mit den wenigstens zwei Schwenkarmen (22, 22') stoff- und/oder form- und/oder kraftschlüssig verbunden ist.

8. Fahrzeug nach Anspruch 7, **dadurch gekennzeichnet, dass** die wenigstens eine Strebe (26) achsnah zur Schwenkachse (12) angeordnet ist.

9. Fahrzeug nach Anspruch 7 oder 8, **dadurch gekennzeichnet, dass** die wenigstens zwei Schwenkarme (22, 22') mit der wenigstens einen Strebe (26) einen, insbesondere u-förmigen, Schwenkrahmen (28) bilden.

10. Fahrzeug nach einem der Ansprüche 6 bis 9, **dadurch gekennzeichnet, dass** der Schwenkrahmen (28) einstückig gebildet ist.

11. Fahrzeug nach einem der vorhergehenden Ansprüche, **dadurch gekennzeichnet, dass** Mittel zur Verschwenkbegrenzung (30) die Verschwenkbarkeit wenigstens eines der Schwenkarme (22, 22') um die Schwenkachse (12) begrenzen, wobei insbesondere die Mittel zur Verschwenkbegrenzung (30) wenigstens eine Strebe bzw. einen Glieder- bzw. Gelenkstab bzw. ein Seil (32, 32') bzw. ein Band bzw. eine Kette aufweisen, dessen eines freie Ende (34) fahrzeugkarosserieseitig und dessen verbleibendes freies Ende (34') an wenigstens einem Schwenkarm 22, 22', insbesondere zugfest, gehalten ist.

12. Fahrzeug nach einem der vorhergehenden Ansprüche, **dadurch gekennzeichnet, dass** wenigstens einer der Schwenkarme (22, 22'), insbesondere die zwei Schwenkarme (22, 22'), bzw. der Schwenkrahmen (12) derart gestaltet und am Fahrzeugheck (14) angeordnet ist/sind, dass der/die Schwenkarm/Schwenkarme (22, 22') bzw. der Schwenkrahmen (12) durch eine Außenfläche (58) der Fahrzeugheckklappe (8) wenigstens abschnittsweise, insbesondere größtenteils, vorzugsweise vollständig, überdeckt ist/sind.

13. Fahrzeug nach einem der vorhergehenden Ansprüche, **dadurch gekennzeichnet, dass** die zweiten Führungsmittel (18) wenigstens einen, insbesondere drei, vorzugsweise vier, Führungsstift (e) (38, 38') aufweisen, die mit den ersten Führungsmitteln (16) für die translatorische Bewegungsführung zur Anbringung der Fahrzeugheckklappe am Fahrzeugheck (14) zusammenwirken, von denen wenigstens ein Führungsstift (38, 38' an jeweils wenigstens einer der Seitenflanken (40, 40') der Fahrzeugheckklappe (8) angeordnet sind,

14. Fahrzeug nach Anspruch 13, **dadurch gekennzeichnet, dass** die Fahrzeugheckklappe (8) wenigstens mittels der zweiten Führungsmittel (18), insbesondere mittels wenigstens eines Führungsstiftes (38, 38'), an dem Schwenkrahmen (32) befestigbar ist.

15. Fahrzeug nach einem der vorhergehenden Ansprüche, **dadurch gekennzeichnet, dass** wenigstens einer der Schwenkarme (22, 22') wenigstens eine Führungsnut (64) aufweist, die mit den zweiten Führungsmitteln (18) der Fahrzeugheckklappe (14) derart zusammenwirkt, dass die translatorische Bewegungsführung der Fahrzeugheckklappe (8) radial zur Schwenkachse (12) gerichtet ist.

16. Fahrzeug nach Anspruch 15, **dadurch gekennzeichnet, dass** die Schwenkeinrichtung (10), insbesondere die ersten Führungsmittel (16) bzw. die zweiten Führungsmitteln (18), eine Positionierhilfe (43, 43') für die Anbringung der Fahrzeugheckklappe (8) am Fahrzeugkeck (14), insbesondere einen Anschlag (43, 43') zur Wegbegrenzung der Fahrzeugheckklappe (8) aufweist, durch den die Zielposition für die Fahrzeugheckklappe (8) vorgegeben ist, wobei die Positionierhilfe (43, 43') vorzugsweise an wenigstens einer Führungsnut (42, 42') ausgebildet bzw. angeordnet ist.

## Claims

1. Vehicle (2), in particular motor vehicle, having a vehicle tailgate (8) which is arranged to be pivotable on the vehicle rear (14) by means of a pivot device (10) about a pivot axis (12) between a closed position, in which it defines a loading surface (6) of the vehicle (2) on the rear side, and an open position, in which it opens the loading surface (6) on the rear side, wherein the pivot device (10) with first guide means (16), which are arranged on the vehicle rear (14) and with second guide means (18), which in turn are arranged on the vehicle tailgate (8), cooperate for translational motion control of the vehicle tailgate (8) for attachment thereof on the vehicle rear (14) such that the vehicle tailgate (8) is guided to be movable between an initial position, in which the first guide means (16) and the second guide means (18) are guided to one another for translational motion control of the vehicle tailgate (8), and a target position, in which the vehicle tailgate (8) is arranged as intended on the vehicle rear (14), and the second guide means (18) are arranged on the lateral flanks (40, 40') of the vehicle tailgate (8) and the first guide means (16) have at least two pivot arms (22, 22') spaced from one another in axial direction of the pivot axis (12) and arranged on the vehicle rear (14) to be pivotable about the pivot axis (12) which are longitudinally extended radially to the pivot axis (12) and each form a guide part which cooperates with the second guide means (18) for translational motion control of the vehicle tailgate (8), **characterised in that** the at least one pivot arm (22, 22') is arranged at least in sections in a gap (52) between vehicle tailgate (8) and vehicle rear lateral parts (54, 56).

2. Vehicle according to claim 1, **characterised in that** the first guide means (16) and the second guide means (18) are formed to be complementary to one another at least in sections for translational motion control.

3. Vehicle according to claim 1 or 2, **characterised in that** the first guide means (16) in cooperation with the second guide means (18) form an at least in sections linear guide (20) for attaching the vehicle tailgate (8) on the vehicle rear (14).

4. Vehicle according to one of the preceding claims, **characterised in that** the first guide means (16) with the second guide means (18) are equipped and configured for cooperation like a sliding bearing guide or roller guide (64) or ball-bearing guide for translational motion control.

5. Vehicle according to one of the preceding claims, **characterised in that** the first guide means (16) in cooperation with the second guide means (18) are equipped and configured to form a telescopic guide rail.

6. Vehicle according to one of the preceding claims, **characterised in that** the at least two of the pivot arms (22, 22') are motion-coupled to one another by coupling means (24) such that the respective pivot motion thereof about the pivot axis (12) is matched to one another, in particular synchronised with one another.

7. Vehicle according to claim 6, **characterised in that** the coupling means (24) have at least one brace (26) which connects the at least two of the pivot arms (22, 22') to one another and in particular the at least one brace (26) is connected to the at least two pivot arms (22, 22') integrally and/or positively and/or non-positively.

8. Vehicle according to claim 7, **characterised in that** the at least one brace (26) is arranged close to the axis of the pivot axis (12).

9. Vehicle according to claim 7 or 8, **characterised in that** the at least two pivot arms (22, 22') with the at least one brace (26) form an, in particular U-shaped, pivot frame (28).

10. Vehicle according to one of claims 6 to 9, **characterised in that** the pivot frame (28) is formed in one piece.

11. Vehicle according to one of the preceding claims, **characterised in that** means for pivot limitation (30) which limit pivotability of at least one of the pivot arms (22, 22') about the pivot axis (12), wherein in particular the means for pivot limitation (30) have at least one brace or a link rod or hinge rod or a cable (32, 32') or a belt or a chain, the one free end (34) of which is mounted on the vehicle bodywork-side and the remaining free end (34') of which is mounted on at least one pivot arm 22, 22', in particular in tension-proof manner.

12. Vehicle according to one of the preceding claims, **characterised in that** at least one of the pivot arms (22, 22'), in particular the two pivot arms (22, 22'), or the pivot frame (12) is/are designed and arranged on the vehicle rear (14) such that the pivot arm/pivot arms (22, 22') or the pivot frame (12) is/are covered by an outer surface (58) of the vehicle tailgate (8) at least in sections, in particular for the greatest part, preferably completely.

13. Vehicle according to one of the preceding claims, **characterised in that** the second guide means (18) have at least one, in particular three, preferably four, guide pin(s) (38, 38'), which cooperate with the first guide means (16) for translational motion control for attaching the vehicle tailgate on the vehicle rear (14), of which at least one guide pin (38, 38') are arranged on respectively at least one of the lateral flanks (40, 40') of the vehicle tailgate (8).

14. Vehicle according to claim 13, **characterised in that** the vehicle tailgate (8) is attachable on the pivot frame (32) at least by means of the second guide means (18), in particular by means of at least one guide pin (38, 38').

15. Vehicle according to one of the preceding claims, **characterised in that** at least one of the pivot arms (22, 22') has at least one guide groove (64) which cooperates with the second guide means (18) of the vehicle tailgate (14) such that translational motion control of the vehicle tailgate (8) is directed radially to the pivot axis (12).

16. Vehicle according to claim 15, **characterised in that** the pivot device (10), in particular the first guide means (16) or the second guide means (18), has a positioning aid (43, 43') for attaching the vehicle tailgate (8) on the vehicle rear (14), in particular a stop (43, 43') for path limitation of the vehicle tailgate (8), by means of which the target position for the vehicle tailgate (8) is predetermined, wherein the positioning aid (43, 43') is configured or arranged preferably on at least one guide groove (42, 42').

## Revendications

1. Véhicule (2), en particulier véhicule automobile,
avec un hayon de véhicule (8) qui est disposé de façon à pouvoir, au moyen d'un dispositif de pivotement (10), pivoter sur l'arrière du véhicule (14) autour d'un axe de pivotement (12) entre une position de fermeture dans laquelle il limite côté arrière une surface de chargement (6) du véhicule (2), et une position d'ouverture dans laquelle il ouvre côté arrière la surface de chargement (6),
le dispositif de pivotement (10) comportant des premiers moyens de guidage (16) qui sont disposés sur l'arrière du véhicule (14) et coopèrent avec des deuxièmes moyens de guidage (18) qui sont à leur tour disposés sur le hayon de véhicule (8) de manière à réaliser le guidage de mouvement de translation du hayon de véhicule (8) pour sa mise en place sur l'arrière du véhicule (14),
le hayon de véhicule (8) étant guidé de façon mobile entre une position initiale, dans laquelle les premiers moyens de guidage (16) et les deuxièmes moyens de guidage (18) sont amenés les uns par rapport aux autres pour le guidage de mouvement de translation du hayon de véhicule (8), et une position cible, dans laquelle le hayon de véhicule (8) est disposé sur l'arrière du véhicule (14) conformément à sa finalité, et les deuxièmes moyens de guidage (18) étant disposés sur les flancs latéraux (40, 40') du hayon de véhicule (8), et les premiers moyens de guidage (16) comportant au moins deux bras pivotants (22, 22') disposés à distance l'un de l'autre dans la direction axiale de l'axe de pivotement (12) et de façon pivotante autour de l'axe de pivotement (12) sur l'arrière du véhicule (14), lesquels bras pivotants sont allongés radialement à l'axe de pivotement (12) et forment respectivement une partie de guidage qui coopère avec les deuxièmes moyens de guidage (18) pour le guidage de mouvement de translation du hayon de véhicule (8),
**caractérisé en ce que**
l'au moins un bras pivotant (22, 22') est disposé au moins par tronçons dans un interstice (52) entre le hayon de véhicule (8) et des parties latérales de hayon (54, 56).

2. Véhicule selon la revendication 1, **caractérisé en ce que** les premiers moyens de guidage (16) et les deuxièmes moyens de guidage (18) sont formés au moins par tronçons de façon complémentaire entre eux pour le guidage de mouvement de translation.

3. Véhicule selon la revendication 1 ou 2, **caractérisé en ce que** les premiers moyens de guidage (16), en coopération avec les deuxièmes moyens de guidage (18), forment un guidage (20) linéaire au moins par tronçons pour la mise en place du hayon de véhicule (8) sur l'arrière du véhicule (14).

4. Véhicule selon l'une des revendications précédentes, **caractérisé en ce que** les premiers moyens de guidage (16) avec les deuxièmes moyens de guidage (18) sont agencés et constitués pour la coopération à la façon d'un guidage à palier lisse ou respectivement d'un guidage à rouleaux (64) ou respectivement d'un guidage supporté sur roulement à billes pour le guidage de mouvement de translation.

5. Véhicule selon l'une des revendications précédentes, **caractérisé en ce que** les premiers moyens de guidage (16) en coopération avec les deuxièmes moyens de guidage (18) sont agencés et constitués pour la formation d'un guidage à rail télescopique.

6. Véhicule selon l'une des revendications précédentes, **caractérisé en ce que** les au moins deux des bras pivotants (22, 22') sont couplés en mouvement l'un avec l'autre par des moyens de couplage (24) de telle sorte que leur mouvement de pivotement respectif autour de l'axe de pivotement (12) est harmonisé l'un avec l'autre, en particulier est synchronisé l'un avec l'autre.

7. Véhicule selon la revendication 6, **caractérisé en ce que** les moyens de couplage (24) comportent au moins une entretoise (26) qui raccorde l'un à l'autre les au moins deux des bras pivotants (22, 22'), et en particulier l'au moins une entretoise (26) est raccordée par liaison de matière et/ou de forme et/ou de force aux au moins deux bras pivotants (22, 22').

8. Véhicule selon la revendication 7, **caractérisé en ce que** l'au moins une entretoise (26) est disposée de façon axialement proche de l'axe de pivotement (12).

9. Véhicule selon la revendication 7 ou 8, **caractérisé en ce que** les au moins deux bras pivotants (22, 22') forment avec l'au moins une entretoise (26) un cadre pivotant (28), en particulier en forme de U.

10. Véhicule selon l'une des revendications 6 à 9, **caractérisé en ce que** le cadre pivotant (28) est formé d'une seule pièce.

11. Véhicule selon l'une des revendications précédentes, **caractérisé en ce que** des moyens destinés à la limitation du pivotement (30) limitent l'aptitude au pivotement d'au moins un des bras pivotants (22, 22') autour de l'axe de pivotement (12), en particulier les moyens destinés à la limitation du pivotement (30) comportant au moins une entretoise ou respectivement une barre à maillons ou respectivement une barre articulée ou respectivement un câble (32, 32') ou respectivement un ruban ou respectivement une chaîne dont une extrémité (34) libre est retenue côté carrosserie du véhicule et dont l'extrémité (34') libre restante est retenue sur au moins un bras pivotant (22, 22'), en particulier de façon résistante à la traction.

12. Véhicule selon l'une des revendications précédentes, **caractérisé en ce qu'**au moins un des bras pivotants (22, 22'), en particulier les deux bras pivotants (22, 22'), ou respectivement le cadre pivotant (12) est/sont constitué(s) et disposé(s) sur l'arrière du véhicule (14) de telle sorte que le / les bras pivotant(s) (22, 22') ou respectivement le cadre pivotant (12) est/sont recouverts au moins par tronçons, de préférence en majeure partie, par une surface extérieure (58) du hayon de véhicule (8).

13. Véhicule selon l'une des revendications précédentes, **caractérisé en ce que** les deuxièmes moyens de guidage (18) comportent au moins une, en particulier trois, de préférence quatre, broche(s) de guidage (38, 38') qui coopèrent avec les premiers moyens de guidage (16) pour le guidage de mouvement de translation en vue de la mise en place du hayon de véhicule sur l'arrière du véhicule (14), broches de guidage dont au moins une broche de guidage (38, 38') est disposée sur respectivement au moins un des flancs latéraux (40, 40') du hayon de véhicule (8).

14. Véhicule selon la revendication 13, **caractérisé en ce que** le hayon de véhicule (8) peut être fixé sur le cadre pivotant (32) au moins au moyen des deuxièmes moyens de guidage (18), en particulier au moyen d'au moins une broche de guidage (38, 38').

15. Véhicule selon l'une des revendications précédentes, **caractérisé en ce qu'**au moins un des bras pivotants (22, 22') comporte au moins une rainure de guidage (64) qui coopère avec les deuxièmes moyens de guidage (18) du hayon de véhicule (14) de telle sorte que le guidage de mouvement de translation du hayon de véhicule (8) est orienté radialement par rapport à l'axe de pivotement (12).

16. Véhicule selon la revendication 15, **caractérisé en ce que** le dispositif de pivotement (10), en particulier les premiers moyens de guidage (16) ou respectivement les deuxièmes moyens de guidage (18), comporte une aide au positionnement (43, 43') pour la mise en place du hayon de véhicule (8) sur l'arrière du véhicule (14), en particulier une butée (43, 43') pour la limitation de la course du hayon de véhicule (8) par laquelle la position cible est spécifiée pour le hayon de véhicule (8), l'aide au positionnement (43, 43') étant constituée ou respectivement disposée de préférence sur au moins une rainure de guidage (42, 42').
